# EUROPEAN PATENT APPLICATION

(11) **EP 4 790 464 A1**
(43) Date of publication of application: **12.08.2026**
(21) Application number: 24878560.2
(22) Date of filing: 03.07.2024
(51) Int. Cl.: G02B 6/12

(54) **OPTICAL CHIP, OPTICAL DEVICE, MANUFACTURING METHOD, OPTICAL MODULE, AND OPTICAL PROCESSING DEVICE**

(30) Priority: 20.10.2023 CN 202311376400
(71) Applicant: HUAWEI TECHNOLOGIES CO., LTD., Shenzhen 518129 (CN)
(72) Inventor: HU, Zhuo, Shenzhen, Guangdong 518129 (CN); ZHANG, Hao, Shenzhen, Guangdong 518129 (CN); LIU, Jiayong, Shenzhen, Guangdong 518129 (CN); QIU, Zhicheng, Shenzhen, Guangdong 518129 (CN); SU, Changzheng, Shenzhen, Guangdong 518129 (CN); LI, Zhaoming, Shenzhen, Guangdong 518129 (CN); TANG, Xiaofeng, Shenzhen, Guangdong 518129 (CN)
(74) Representative: Pfenning, Meinig & Partner mbB
(86) International application number: PCT/CN2024/103324
(87) International publication number: WO 2025/081907

(57) **Abstract**

An optical chip (1000A or 1000B), an optical component (10000A or 10000B), a manufacturing method, an optical module, and an optical processing device are provided, and are applied to the field of design and manufacturing of the optical chip (1000A or 1000B) and the optical component (10000A or 10000B). The optical chip (1000A or 1000B) includes a die substrate (100A or 100B), at least one 3D printing lens (200B), and a built-in optical processing component (300B). A waveguide (110A, 110B, 111B, ..., or 114B) is disposed on the die substrate (100A or 100B), and an avoidance groove (120B) is formed on an outer surface of the die substrate (100A or 100B). The at least one 3D printing lens (200B) includes an inner lens (210B, 211B, 212B, or 213B). The inner lens (210B, 211B, 212B, or 213B) and the built-in optical processing component (300B) are disposed in the avoidance groove (120B), and the inner lens (210B, 211B, 212B, or 213B) is coupled to the die substrate (100A or 100B) or the built-in optical processing component (300B). The inner lens (210B, 211B, 212B, or 213B) is configured to: shape an optical signal, and perform transmission of the optical signal with the waveguide (110A, 110B, 111B, ..., or 114B) and/or the built-in optical processing component (300B). In this way, a packaging coupling structure of the built-in optical processing component (300B) and the optical chip ( 1000A or 1000B) can be omitted, costs and area overheads of the optical chip (1000A or 1000B) can be reduced, and integration of the optical chip (1000A or 1000B) can be improved. This can greatly promote low-cost and miniaturization development of the optical component (10000A or 10000B).

## Description

This application claims priority to Chinese Patent Application No. 202311376400.8, filed with the China National Intellectual Property Administration on October 20, 2023 and entitled "OPTICAL CHIP, OPTICAL COMPONENT, MANUFACTURING METHOD, OPTICAL MODULE, AND OPTICAL PROCESSING DEVICE", which is incorporated herein by reference in its entirety.

### TECHNICAL FIELD

This application relates to the field of design and manufacturing technologies of an optical chip and an optical component, and in particular, to an optical chip, an optical component, a manufacturing method, an optical module, and an optical processing device.

### BACKGROUND

With development of technologies, there is a higher requirement for processing performance of chips, leading to an increasing requirement for high miniaturization and integration of the chips. For an electronic chip, external interconnection packaging such as a metal lead and the like are implemented outside a die (die) of the electronic chip. The electronic chip exchanges a related electrical signal for data processing with a peripheral discrete component through the packaged metal lead. Because area overheads are small, the electronic chip undergoes rapid development of high miniaturization and integration.

For an optical chip, a packaging coupling structure (for example, a fiber coupling structure after packaging and coupling processing) needs to be designed for an optical port outside a die of an optical signal. However, the packaging coupling structure of the optical port of the optical chip occupies a large amount of area overheads and cost overheads of the optical chip, and increases area overheads and cost overheads of an optical component. This hinders low-cost, miniaturization, and high integration development of the optical chip and the optical component.

### SUMMARY

Embodiments of this application provide an optical chip, an optical component, a manufacturing method, an optical module, and an optical processing device, so that costs and area overheads of the optical chip and the optical component are reduced, and a miniaturization degree and integration are improved.

To achieve the foregoing objectives, the following technical solutions are used in embodiments of this application.

According to a first aspect, an optical chip is provided, including a die substrate, at least one 3D printing lens, and a built-in optical processing component. A waveguide is disposed on the die substrate, an avoidance groove is formed on an outer surface of the die substrate, the at least one 3D printing lens includes an inner lens, the inner lens and the built-in optical processing component are disposed in the avoidance groove, the inner lens is coupled to the die substrate or the built-in optical processing component, and the inner lens is configured to: shape an optical signal, and perform transmission of the optical signal with the waveguide and/or the built-in optical processing component.

In this embodiment of this application, during chip manufacturing, the avoidance groove is processed on the die substrate of the optical chip. A conventional external discrete component is disposed in the avoidance groove as the built-in optical processing component, and an inner lens for implementing light spot shaping is manufactured in the avoidance groove by using a 3D printing technology. Mode extension is implemented by using the inner lens, so that the built-in optical processing component can implement optical transmission and optical processing inside the optical chip. In this embodiment of this application, the inner lens of 3D printing can resolve a problem that the built-in optical processing component cannot implement optical transmission with the waveguide inside the optical chip, so that the external discrete component is integrated into the optical chip as the built-in optical processing component, and an original packaging coupling structure between the external discrete component and the optical chip can be omitted, thereby fundamentally reducing costs and area overheads that are caused by the packaging coupling structure of the optical chip. In addition, based on the solution in this embodiment of this application, the external discrete component is packaged in the optical chip, so that electronic chip packaging and optical chip packaging can share a same platform.

In a possible implementation, the built-in optical processing component includes a passive optical component, the inner lens includes a first inner lens and a second inner lens, and the waveguide includes a first waveguide. A first end of the first waveguide extends from the die substrate to a first inner side surface of the avoidance groove, the first inner lens is disposed at a position that corresponds to the first waveguide and that is on the first inner side surface, the passive optical component is disposed in the avoidance groove and is located in an optical transmission path between the second inner lens and the first inner lens, and the second inner lens, the passive optical component, the first inner lens, and the first waveguide sequentially form a transmission path of a first optical signal. In this embodiment of this application, the passive optical component may be packaged in the avoidance groove of the optical chip as a built-in optical processing component. The passive optical component may be configured to process an optical signal. In this case, the first optical signal may be transmitted, through the first inner lens and the second inner lens, to the passive optical component for optical processing, and the first optical signal processed by the passive optical component is transmitted to the waveguide of the die substrate of the optical chip for subsequent optical transmission and optical processing.

In some examples, a second waveguide is further disposed on the die substrate, and a first end of the second waveguide extends from the die substrate to a second inner side surface of the avoidance groove. The second inner lens is disposed at a position corresponding to the first end of the second waveguide, and the second waveguide is configured to perform transmission of the first optical signal with the second inner lens. In this embodiment of this application, the first optical signal may be transmitted from the die substrate to the passive optical component through the waveguide and the inner lens, and after the passive optical component performs optical processing on the first optical signal, the first optical signal after optical processing is transmitted to the die substrate of the optical chip through the inner lens and the waveguide for subsequent optical transmission and optical processing.

In some examples, a first active optical component and the passive optical component may be used as different built-in optical processing components. In this case, the first active optical component is disposed in the avoidance groove. The first active optical component is coupled to the second inner lens. The first active optical component is configured to perform transmission of the first optical signal with the second inner lens. In this embodiment of this application, the first optical signal may be an optical signal transmitted by the first active optical component to the second inner lens, and is transmitted to the passive optical component through the second inner lens. After performing optical processing on the first optical signal, the passive optical component transmits the first optical signal after optical processing to the first inner lens. Then, the first optical signal after optical processing is transmitted to the die substrate of the optical chip through the first inner lens for subsequent optical transmission and optical processing.

In a possible implementation, the second inner lens is specifically configured to: shape the first optical signal into parallel light, where a beam waist mode field of the second inner lens is greater than a first value, and the first value satisfies: a collimation distance of the first optical signal that is the parallel light is greater than a distance between the second inner lens and the passive optical component. In this embodiment of this application, the inner lens implements light spot shaping based on a Gaussian light beam principle. When the built-in optical processing component includes the passive optical component, a size of a conventional 3D printing lens is usually between 3 µm and 10 µm, and there is no application requirement for increasing a size of the lens. When the second inner lens needs to transmit parallel light to the passive optical component, a collimation distance of parallel light obtained through light spot shaping of the common 3D printing lens cannot meet a distance requirement for optical transmission with the passive optical component. However, in this embodiment of this application, a size of the second inner lens is set to be 15 µm or more, and may even be processed to be 50 µm or more, so that a collimation distance of 1200 µm or more (also referred to as a Rayleigh length) can be implemented, and an optical transmission requirement of the passive optical component in the avoidance groove is completely met, and an operating parameter of the passive optical component in the avoidance groove can meet optical transmission and optical processing requirements.

In a possible implementation, the built-in optical processing component includes a second active optical component, the inner lens includes a third inner lens, the waveguide includes a third waveguide, a first end of the third waveguide extends from the die substrate to an inner side surface of the avoidance groove, and the third inner lens is mounted on the second active optical component and is located at a position corresponding to the first end of the third waveguide. The second active optical component is configured to perform transmission of a second optical signal with the third inner lens. The third inner lens is configured to: shape the second optical signal, and perform transmission of the shaped second optical signal with the first end of the third waveguide. In this embodiment of this application, the second active optical component may be disposed in the avoidance groove as a built-in optical processing component. The second active optical component that provides the second optical signal for the optical chip is integrated into the optical chip, so that packaging and coupling techniques of the second active optical component are reduced, and cost overheads and area overheads of the optical chip are reduced.

In a possible implementation, the at least one 3D printing lens further includes an outer lens, the waveguide further includes a fourth waveguide, a first end of the fourth waveguide extends from the die substrate to an outer side surface of the die substrate, and the outer lens is disposed at a position that corresponds to the first end of the fourth waveguide and that is on the die substrate. The fourth waveguide is configured to perform transmission of a third optical signal with the outer lens. The outer lens is configured to: shape the third optical signal, and transmit the shaped third optical signal. In this embodiment of this application, when the optical chip further needs to perform optical transmission and optical processing with some external discrete components that are not integrated into the optical chip, light spot shaping and mode expansion of the third optical signal may be implemented by using the outer lens, to improve optical coupling efficiency between the optical chip and the external discrete components. In some cases, a packaging coupling structure between the fourth waveguide and an external fiber may be omitted.

In a possible implementation, the optical chip further includes a packaging coupling structure, and the outer lens is configured to perform transmission of the shaped third optical signal with the packaging coupling structure. In this embodiment of this application, when a requirement of coupling between the fourth waveguide and the external fiber is high, a specific packaging coupling structure is still required. However, light spot shaping and mode expansion are performed on the third optical signal by using the outer lens. Based on a 3D lens technology, the outer lens may have higher design flexibility and processing flexibility, so that the outer lens has high light spot shaping and mode expansion capabilities. By using the outer lens, complexity of a packaging technique between the fourth waveguide and the external fiber can be greatly reduced, to reduce costs and area overheads of packaging and coupling techniques of the optical chip.

In a possible implementation, the outer lens is an elliptical lens structure. In this embodiment of this application, usually, a horizontal light field confinement factor and a vertical light field confinement factor of the waveguide of the optical chip are different, so that a light exit light spot of the optical chip is elliptical rather than perfectly circular. However, a fiber light spot of a common external fiber is perfectly circular. Therefore, there is an additional coupling insertion loss between the light exit light spot of the waveguide of the optical chip and a coupled fiber light spot. The outer lens is disposed as an elliptical lens structure whose vertical curvature and horizontal curvature are different, so that the third optical signal that is of an elliptical light spot and that is output by the fourth waveguide of the optical chip is converted into the third optical signal of a perfectly circular light spot, and the third optical signal of the perfectly circular light spot is transmitted to the external fiber, to reduce a coupling insertion loss and improve coupling efficiency.

In a possible implementation, the inner lens includes a connection portion and a shaping lens and/or the outer lens includes a connection portion and a shaping lens. The shaping lens of the inner lens is coupled to the die substrate or the built-in optical processing component through the corresponding connection portion. The shaping lens of the outer lens is coupled to the die substrate through the corresponding connection portion. In this embodiment of this application, when a 3D printing lens (including an inner lens and/or an outer lens) is processed by using a 3D printing technology, a connection portion may be designed and processed for the lens. After the connection portion is designed, reliability and structural stability of the 3D printing lens are higher. In this case, a size of the 3D printing lens may be manufactured to be larger, to further increase a mode expansion capability of the 3D printing lens, thereby implementing higher coupling efficiency. With higher coupling efficiency, more cost overheads and area overheads can be reduced.

In some examples, the inner lens and/or the outer lens may exchange an optical signal with the waveguide of the die substrate through an air medium.

In some examples, the inner lens and/or the outer lens may exchange an optical signal with the waveguide of the die substrate by using a 3D printing structure as a transmission medium. In this case, the inner lens includes a connection portion, a transmission portion, and a shaping lens and/or the outer lens includes a connection portion, a transmission portion, and a shaping lens. The shaping lens of the inner lens is coupled to the corresponding transmission portion, and the transmission portion and/or the shaping lens of the inner lens are/is further coupled to the die substrate or the built-in optical processing component through the connection portion. The shaping lens of the outer lens is coupled to the corresponding transmission portion, and the transmission portion and/or the shaping lens of the outer lens are/is further coupled to the die substrate through the connection portion. In this embodiment of this application, the transmission portion may be processed in the 3D printing lens by using a 3D printing technology. The transmission portion is used as a transmission medium for transmitting an optical signal. For example, straight-through transmission, turning direction transmission, and the like of an optical signal may be implemented by using the transmission portion, to adapt to different optical coupling manners.

For example, the built-in optical processing component may include a modulator, a laser, an isolator, and the like.

According to a second aspect, an embodiment of this application further provides an optical component. The optical component includes a mounting substrate and an optical chip. The optical chip is disposed on the mounting substrate, the optical chip includes a die substrate, at least one 3D printing lens, and a built-in optical processing component, a waveguide is disposed on the die substrate, an avoidance groove is formed on an outer surface of the die substrate, the at least one 3D printing lens includes an inner lens, the inner lens and the built-in optical processing component are disposed in the avoidance groove, the inner lens is coupled to the die substrate or the built-in optical processing component, and the inner lens is configured to: shape an optical signal, and perform transmission of the optical signal with the waveguide and/or the built-in optical processing component.

In some possible implementations, the optical component further includes at least one external discrete component, the at least one 3D printing lens of the optical chip further includes an outer lens, the at least one external discrete component is disposed on the mounting substrate, the outer lens is coupled to an outer side surface of the die substrate of the optical chip, and the optical chip implements optical communication coupling to the at least one external discrete component through the outer lens.

According to a third aspect, an embodiment of this application further provides a manufacturing method, for manufacturing the optical chip described in the first aspect. The method includes: etching a die array on a wafer, where a waveguide is disposed on a die substrate of each die in the die array, and an avoidance groove is formed on an outer surface of the die substrate; and mounting a built-in optical processing component in the avoidance groove, and etching at least one 3D printing lens based on a 3D printing technology, where the at least one 3D printing lens includes an inner lens, the inner lens is disposed in the avoidance groove, the inner lens is coupled to the die substrate or the built-in optical processing component, and the inner lens is configured to: shape an optical signal, and perform transmission of the optical signal with the waveguide and/or the built-in optical processing component.

In a possible implementation, the built-in optical processing component includes a passive optical component, the inner lens includes a first inner lens and a second inner lens, the waveguide includes a first waveguide, and a first end of the first waveguide extends from the die substrate to a first inner side surface of the avoidance groove. Etching the at least one 3D printing lens includes: etching the first inner lens at a position that corresponds to the first waveguide and that is on the first inner side surface. Mounting the built-in optical processing component in the avoidance groove includes: mounting the passive optical component in the avoidance groove and in an optical transmission path between the second inner lens and the first inner lens, where the second inner lens, the passive optical component, the first inner lens, and the first waveguide form a transmission path of a first optical signal in a transmission sequence.

In a possible implementation, a second waveguide is further disposed on the die substrate, and a first end of the second waveguide extends from the die substrate to a second inner side surface of the avoidance groove. Etching the at least one 3D printing lens further includes: etching the second inner lens at a position corresponding to the first end of the second waveguide, where the second waveguide is configured to perform transmission of the first optical signal with the second inner lens.

In a possible implementation, the built-in optical processing component further includes a first active optical component. Mounting the built-in optical processing component in the avoidance groove further includes: disposing the first active optical component in the avoidance groove. Etching the at least one 3D printing lens further includes: etching the second inner lens on the first active optical component, where the first active optical component is configured to output the first optical signal to the second inner lens.

In a possible implementation, the built-in optical processing component includes a second active optical component, the inner lens includes a third inner lens, the waveguide includes a third waveguide, and a first end of the third waveguide extends from the die substrate to an inner side surface of the avoidance groove. Mounting the built-in optical processing component in the avoidance groove includes: mounting the second active optical component in the avoidance groove. Etching the at least one 3D printing lens includes: etching the third inner lens on the second active optical component and at a position corresponding to the first end of the third waveguide, where the second active optical component is configured to output a second optical signal to the third inner lens, and the third inner lens is configured to: shape the second optical signal, and output the shaped second optical signal to the first end of the third waveguide.

In a possible implementation, the at least one 3D printing lens further includes an outer lens, the waveguide further includes a fourth waveguide, and a first end of the fourth waveguide extends from the die substrate to an outer side face of the die substrate. Etching the at least one 3D printing lens further includes: etching the outer lens at a position that corresponds to the first end of the fourth waveguide and that is on the die substrate, where the fourth waveguide is configured to perform transmission of a third optical signal with the outer lens, and the outer lens is configured to: shape the third optical signal, and transmit the shaped third optical signal.

In a possible implementation, the method further includes: manufacturing a packaging coupling structure outside the die substrate, to package the die substrate to obtain the optical chip, where the outer lens is configured to perform transmission of the shaped third optical signal with the packaging coupling structure.

According to a fourth aspect, an embodiment of this application further provides a manufacturing method, for manufacturing the optical component described in the second aspect. The method includes: etching a die array on a wafer, where a waveguide is disposed on a die substrate of each die in the die array, and an avoidance groove is formed on an outer surface of the die substrate; mounting a built-in optical processing component in the avoidance groove, and etching at least one 3D printing lens based on a 3D printing technology, where the at least one 3D printing lens includes an inner lens, the inner lens is disposed in the avoidance groove, the inner lens is coupled to the die substrate or the built-in optical processing component, and the inner lens is configured to: shape an optical signal, and perform transmission of the optical signal with the waveguide and/or the built-in optical processing component; performing die packaging on the die substrate to obtain an optical chip; and packaging and disposing the optical chip on a mounting substrate to obtain the optical component.

In some possible implementations, the optical component further includes at least one external discrete optical component, and packaging and disposing the optical chip on the mounting substrate to obtain the optical component further includes: packaging and disposing the optical chip and the at least one external discrete optical component on the mounting substrate to obtain the optical component.

For technical principles and beneficial effects of the second aspect, the third aspect, and the fourth aspect, refer to related descriptions of the first aspect. Details are not described herein again.

### BRIEF DESCRIPTION OF DRAWINGS

FIG. 1A and FIG. 1B are diagrams of a packaging structure of an electronic chip;
FIG. 2 is a diagram of a packaging structure of an optical chip;
FIG. 3A and FIG. 3B are diagrams of coupling structures of vertical coupling and port coupling of an optical chip;
FIG. 4 is a diagram of a structure of a first optical component including a first optical chip according to an embodiment of this application;
FIG. 5A and FIG. 5B are diagrams of a structure of light spot shaping performed by a first optical chip based on a free-space dual-lens according to an embodiment of this application;
FIG. 6A and FIG. 6B are diagrams of a structure of light spot shaping performed by a first optical chip based on a free-space single lens according to an embodiment of this application;
FIG. 7 is a diagram of a structure of light spot shaping performed by a first optical chip based on a ridge waveguide according to an embodiment of this application;
FIG. 8A and FIG. 8B are diagrams of a structure of light spot shaping performed by a first optical chip based on in-die processing according to an embodiment of this application;
FIG. 9 is a diagram of a structure of light spot shaping performed by a first optical chip based on a lens on which photoetching is performed on the top of the lens according to an embodiment of this application;
FIG. 10 is a diagram 1 of a structure of a second optical component including a second optical chip according to an embodiment of this application;
FIG. 11 is a diagram 1 of a structure of a second optical chip according to an embodiment of this application;
FIG. 12A to FIG. 12D are diagrams of a structure of an inner lens for transmitting an optical signal based on a spatial medium according to an embodiment of this application;
FIG. 13A to FIG. 13D are diagrams of a structure of an inner lens for transmitting an optical signal based on a transmission portion structure according to an embodiment of this application;
FIG. 14 is a diagram of a structure of an inner lens for implementing optical signal turning transmission based on a transmission portion structure according to an embodiment of this application;
FIG. 15 is a diagram 2 of a structure of another second optical chip according to an embodiment of this application;
FIG. 16 is a diagram 3 of a structure of still another second optical chip according to an embodiment of this application;
FIG. 17 is a diagram 4 of a structure of still another second optical chip according to an embodiment of this application;
FIG. 18 is a diagram 5 of a structure of still another second optical chip according to an embodiment of this application;
FIG. 19 is a diagram 6 of a structure of still another second optical chip according to an embodiment of this application;
FIG. 20 is a diagram 2 of a structure of another second optical component including a second optical chip according to an embodiment of this application;
FIG. 21A and FIG. 21B are diagrams of a structure of an outer lens of an elliptical structure according to an embodiment of this application;
FIG. 22 is a schematic flowchart of a manufacturing method of a second optical chip according to an embodiment of this application;
FIG. 23A and FIG. 23B are diagrams of a structure present when a second optical component is a coherent optical transceiver device according to an embodiment of this application;
FIG. 24A and FIG. 24B are diagrams of a structure present when a second optical component is a direct modulation optical transceiver device according to an embodiment of this application;
FIG. 25 is a diagram 1 of a structure of a second optical chip present when a passive optical component in FIG. 16 is a polarization-dependent isolator according to an embodiment of this application;
FIG. 26A and FIG. 26B are diagrams of a structure of a second optical chip present when a passive optical component in FIG. 16 is a polarization-independent isolator according to an embodiment of this application;
FIG. 27 is a diagram 2 of a structure of another second optical chip present when a passive optical component in FIG. 16 is a polarization-dependent isolator according to an embodiment of this application;
FIG. 28A and FIG. 28B are diagrams of simulation effects of the second optical chip in FIG. 25 and the second optical chip in FIG. 27 according to an embodiment of this application;
FIG. 29 is a diagram of a structure of a second optical chip including a first inner lens, a second inner lens, a third inner lens, and an outer lens according to an embodiment of this application; and
FIG. 30A to FIG. 30D are diagrams of a mode expansion effect based on different processing techniques and light spot shaping structures according to an embodiment of this application.

### DESCRIPTION OF EMBODIMENTS

It should be noted that terms such as "first" and "second" in embodiments of this application are merely used to distinguish between features of a same type, and cannot be understood as an indication of relative importance, a quantity, a sequence, or the like.

The term such as "example" or "for example" in embodiments of this application indicate giving an example, an illustration, or a description. Any embodiment or design scheme described as an "example" or "for example" in this application should not be explained as being more preferred or having more advantages than another embodiment or design scheme. Exactly, use of the terms such as "example" or "for example" is intended to present a related concept in a specific manner.

The terms such as "coupling" and "connection" in embodiments of this application should be understood in a broad sense. For example, the terms may mean a direct physical connection or an indirect connection implemented through an electronic component, for example, a connection implemented through a resistor, an inductor, a capacitor, or another electronic component.

First, some basic concepts in embodiments of this application are explained and described.

A chip manufacturing technique includes wafer (wafer) manufacturing, chip probing (chip probing, CP), chip packaging, and a final test (final test, FT). In a wafer manufacturing phase, a designer designs a mask (mask) corresponding to a to-be-processed chip, where a pre-designed structural pattern of a chip circuit/optical path is printed on the mask. During processing, a wafer is etched based on the designed mask and photoresist. After the etching is completed, a die (die) array may be formed on the wafer. The chip probing (chip probing, CP) is to establish an electrical connection between a die (die) and an automatic test equipment (automatic test equipment, ATE) through a probe card (probe card) and a prober (prober) to test electrical connectivity, functions, and parameters of the die. The chip packaging is to cut the wafer, cut off a die on the wafer, discard a die that is tested as unqualified by the chip, and package a die that is tested as qualified by the chip, to obtain a packaged chip. The final test (final test, FT) is to establish an electrical connection between the automatic test equipment (automatic test equipment, ATE) and the packaged chip through a test board (load board) and a test socket (socket) to test electrical connectivity, functions, and parameters of the packaged chip.

Based on different types of signals processed by the chip, the chip may be classified into an electrical signal and an optical chip. In past technology development, an integrated circuit (integrated circuit, IC) supported by a complementary metal oxide semiconductor (complementary metal oxide semiconductor, CMOS) technology develops rapidly, which promotes continuous progress of a modern information technology. As a feature size of a transistor is continuously reduced, a semiconductor manufacturing level gradually approaches a limit of a physical technique level, which causes improvement of integration to become slow or even stagnant. In addition, system performance is severely restricted, mainly reflected in an insurmountable electronic bottleneck of an electrical interconnection network. When an interconnection electrical signal is interfered by a resistor, a parasitic capacitor, an induced inductor, or the like during transmission, a time delay is caused, transmission performance of a high-frequency signal is also severely affected, and an increase of an electrical interconnection bandwidth is limited. In addition, the transmitted electrical signal is also vulnerable to electromagnetic interference of an adjacent electromagnetic line or an external electromagnetic field, and consequently, quality of a transmitted signal deteriorates. In addition, with an increase of a quantity of microprocessors and an increase of a computing speed, power consumption and heat dissipation caused by a parasitic effect gradually become limiting factors that cannot be ignored. To break through a bottleneck of a conventional IC technology in the post-Moore era, promote development of modern communication networks, and adapt to increasing computing requirements of modern times, optical interconnection emerges with its unique performance advantages, becoming an important technical means to replace conventional electrical interconnection. In comparison with electrical signals, using light as a carrier for signal transmission has incomparable advantages, mainly in terms of large transmission bandwidth, small transmission loss, strong anti-interference capability, and high-speed crosstalk-free parallel transmission. Therefore, using light for interconnection and communication will undoubtedly become a mainstream development direction of future high-speed communication. In a broad sense, optical interconnection means connecting a source to a sink through an optical carrier. Although a fiber communication technology has developed rapidly over the past few decades, and has become an important pillar of a modern long-distance, high-speed, and large-capacity communication network, an optical interconnection technology still has many technical difficulties in short-distance data interconnection such as data center and on-chip. How to develop on-chip optical interconnection to break through a bottleneck of conventional electrical interconnection is also one of current research hotspots. In addition, at a switching node of a current optical communication network, optical-electrical-optical signal processing is still limited by an electronic bottleneck. Therefore, on-chip optical interconnection and an optical processing technology are of great significance to development of a modern high-speed and large-capacity communication network.

A core for implementing on-chip optical interconnection and optical processing is an optoelectronic integrated chip, which is formed by a plurality of active and passive components that have different functions and that are integrated into a same substrate, and performs interconnection and communication through an optical waveguide, to implement an on-chip optical interconnection processing system with a specific function. A photonic integration technology is developed rapidly in recent years. Currently, mainstream material platforms include III-V compounds, silicon-based materials, and the like. The III-V materials such as indium phosphide (InP) have a main advantage of being direct bandgap materials, which may be used to manufacture key active components such as a semiconductor laser, a modulator, and a detector. However, a non-standardized complex manufacturing technique causes high manufacturing costs, and also limits true commercialization of the III-V materials. In contrast, silicon materials have the following advantages: abundant natural reserves, low costs, near-transparency in near-infrared band and even medium-infrared band, and an extremely low material loss. A large relative refractive index difference of silicon-on-insulator (silicon-on-insulator, SOI) waveguides facilitates high-density integration of components. More importantly, the silicon materials are compatible with an existing mature electro-CMOS technique, which undoubtedly provides crucial support for development of a silicon-based optoelectronics technology. Given that the silicon material is an indirect bandgap material and therefore unsuitable for creating a high-efficiency light source, monolithic integration on a single material system still faces a great challenge. Currently, a mainstream development direction is still a hybrid integration technology, that is, integrating, into a silicon-based passive chip in a processing manner such as bonding, an independently manufactured discrete active component (such as a laser and a photoelectric detector) and some discrete passive optical components, to implement a low-cost and high-performance hybrid photonic integrated optical chip.

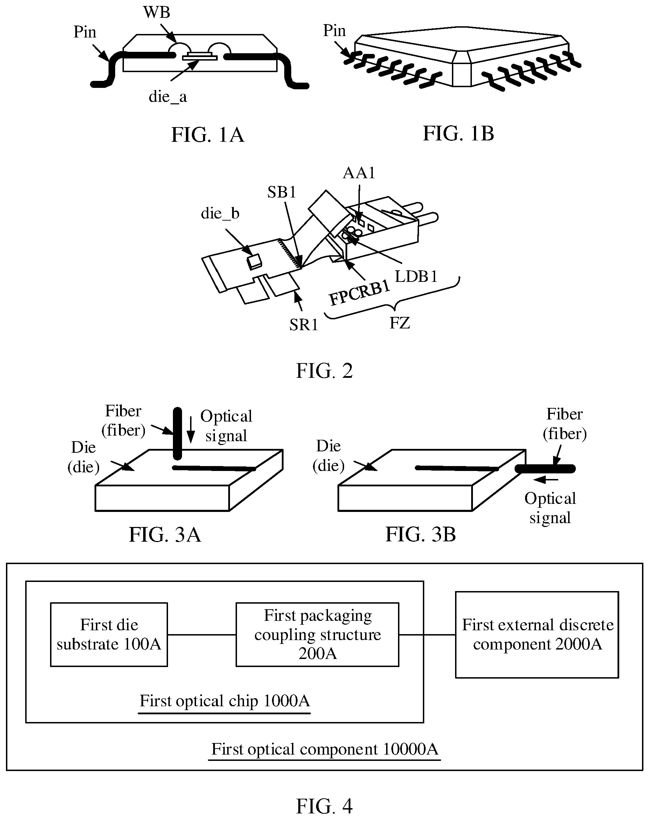

Currently, with development of technologies, there is a higher requirement for processing performance of chips, leading to an increasing requirement for high miniaturization and integration of the chips. FIG. 1A and FIG. 1B are diagrams of packaging of an electronic chip. FIG. 1A is a schematic cross-sectional view of the electronic chip. It can be learned from FIG. 1A that, a die die_a of the electronic chip is coupled, based on a metal interconnection line WB, to a metal pin Pin packaged by the chip, to implement external interconnection packaging and the like. As shown in FIG. 1B, the electronic chip exchanges a related electrical signal for data processing with a peripheral discrete component WS through a packaged metal pin Pin. Because a technique of the metal pin Pin of the electronic chip is simple and area overheads are small, the electronic chip has rapid development of high miniaturization and integration. FIG. 2 is a diagram of splitting of a packaging structure of an optical chip. The optical chip includes a die die_b, a heat dissipation material layer SR1, and a packaging coupling structure FZ. The packaging coupling structure FZ includes a structural bonding (structural bonding) structure SB1, an FPC reinforcement bonding (FPC reinforcement bonding) structure FPCRB1, a laser diode bonding (laser diode bonding) structure LDB1, an active alignment (active alignment) structure AA1, and the like. However, the packaging coupling structure of an optical port of the optical chip occupies a large amount of area overheads and cost overheads of the optical chip. This hinders low-cost, miniaturization, and high integration development of the optical chip. It can be learned from FIG. 2 that, packaging of the optical chip involves optical port coupling and input/output design. Optical port coupling occupies a large quantity of non-functional regions of packaging of the optical chip, and occupies an area of a finished product of packaging of the optical chip. This causes high costs and area overheads in all scenarios to which the optical chip is applied. How to resolve costs and area overheads of the optical chip is a difficult problem. An optical module based on an optical chip is used as an example. The optical module is currently widely applied to communication scenarios such as long-distance backbone, metro transmission, data center transmission, and access network transmission. Compared with conventional copper wire transmission, optical module-based fiber transmission features a large capacity, a low delay, a strong anti-interference capability, and a long transmission distance. Fiber-to-the-home copper-to-fiber conversion (fiber routers are directly configured for home terminals) is an inevitable trend in the communication field. Fiber-to-the-room (for example, fiber routers are directly configured for device terminals such as a computer and a television) is also a key development direction that is widely discussed recently. A biggest difficulty of fiber-to-the-home is how to make costs equal to or even lower than that of copper-based access. Currently, a largest portion of cost lies in high costs of the optical module, which greatly limits wider application of optical communication. Reducing costs of the optical module is a core for further expanding optical communication.

An optical coupling technology is an important technology for constituting an optical interconnection system. A main purpose of the optical coupling technology is to provide an optical connection interface, so that the optical connection interface can be compatible with an external fiber communication network through coupling and a connection to a fiber, thereby fully utilizing an application potential of an optical interconnection chip. In addition, an on-chip optical coupling technology may also be used for interconnection between optical chips, to construct a heterogeneous integrated on-chip optical interconnection system. Coupling and a connection between an optical chip and a fiber are a most important aspect of optical coupling, and a main challenge lies in a large-size mismatch between mode distribution of the fiber and a photonic waveguide. A common fiber-photonic chip interface may be classified into two types: vertical coupling and end-face coupling.

Vertical coupling may also be referred to as grating coupling (grating coupling) A most common solution is a vertically coupled diffraction grating structure shown in FIG. 3A, which changes a waveguide refractive index by using a periodic pattern defined along one or more dimensions. This allowing for phase matching between an optical mode in which incidence is performed from a fiber (fiber) to the grating structure in a nearly vertical direction and an optical mode of an on-chip integrated waveguide in a horizontal plane. Such a vertically coupled grating may usually be mass-manufactured, is more compatible with a packaging technique, may be placed at any position on a die (die), and has a relatively loose positioning tolerance. However, this structure is essentially polarization and wavelength sensitive, and needs to be further designed and optimized to reduce these limitations. A grating-based vertical coupling technology is a non-planar coupling design. This non-planar coupling design causes a chip surface to be blocked, and increases an overall size of chip packaging.

End-face coupling may also be referred to as edge coupling (edge coupling) As shown in FIG. 3B, an optical coupling interface based on end-face coupling is designed on an optical chip. A light beam is coupled from a side surface and transmitted into or out of a waveguide in the chip. The end-face coupling manner can provide high-bandwidth and polarization-independent optical coupling. Currently, end-face coupling has become a mainstream coupling manner of optical chips, and is widely used in optical chips based on InP materials, SiPh, and the like.

An embodiment of this application provides an optical processing device. The optical processing device includes a mounting plate. The processor device further includes an optical module or an optical component. The optical module or the optical component is disposed on the mounting plate. The optical module includes a fiber interface and the optical component, and the optical component is coupled to the fiber interface. For example, the optical processing device may be an optical communication device, an optical manufacturing device, an optical detection device, or the like.

In some possible implementations, the optical component may be a first optical component. As shown in FIG. 4, the first optical component 10000A includes a first optical chip 1000A and at least one first external discrete component 2000A. The first optical chip 1000A includes a first die substrate 100A and a first packaging coupling structure 200A. An optical transmission waveguide 110A is processed on the first die substrate 100A. The optical transmission waveguide 110A is coupled to a first fiber fiber1 through the first packaging coupling structure 200A, and is coupled to the at least one first external discrete component 2000A through the first fiber fiber1, to implement transmission and exchange of an optical signal. The at least one first external discrete component 2000A may include a passive component and/or an active component.

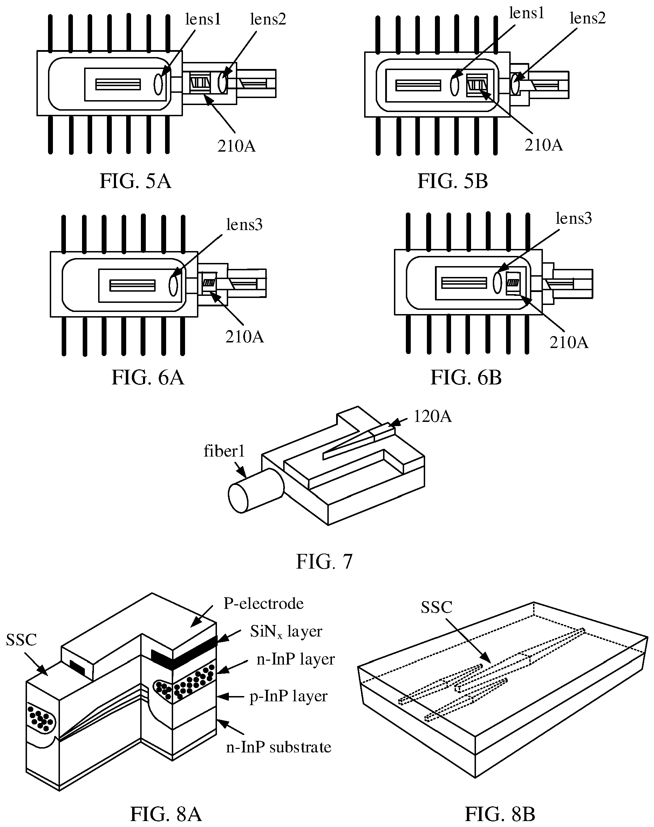

In some possible implementations, as shown in FIG. 5A and FIG. 5B, in the first packaging coupling structure 200A of the first optical chip 1000A, a free-space lens (lens) may be designed to perform light beam shaping. FIG. 5A and FIG. 5B show a solution of implementing parallel light shaping based on a dual-lens structure including a first lens lens1, a second lens lens2, and an isolator 210A. FIG. 6A and FIG. 6B show a solution of implementing converged light shaping based on a single-lens structure including a third lens lens3 and an isolator 210A. In a spatial optical path, a lens coupling technique needs to be considered when the dual-lens structure is used, which occupies a large quantity of space dimensions and material costs. In the single-lens structure, although one fewer lens is used, savings in costs and area overheads are limited. In addition, in a solution of disposing a lens in free space, the lens is sensitive to a length of an optical path, and an actual coupling insertion loss (insertion loss, IL) is large. This solution can apply only to a scenario with a sufficient optical power budget.

To reduce costs and area overheads that are caused by optical port coupling of the first optical chip 1000A, so as to implement low costs and high integration of the first optical chip 1000A, in some possible implementations, as shown in FIG. 7, a ridge waveguide 120A may be designed on a die of the first optical chip 1000A as a taper structure, to form an SSC. The ridge waveguide 120A covers the optical transmission waveguide 110A of the first optical chip 10000A, and light beam leakage is implemented by using the ridge waveguide 120A, to expand a beam waist mode field of an optical signal transmitted by the optical transmission waveguide 110A of the first optical chip 1000A. When the beam waist mode field of the optical signal transmitted by the first optical chip 1000A is expanded, quality of coupling between the transmitted optical signal and the coupled first fiber 1 is improved. With higher optical coupling quality, a structural requirement and a technique requirement for the first packaging coupling structure 200A may be appropriately reduced, and coupling area overheads may be reduced to some extent.

For example, a manner shown in FIG. 7 may be applied to the first optical chip 1000A based on a III-V material (for example, an InP material). In this case, a mode expansion capability of the ridge waveguide 120A is limited, and usually, maximum mode expansion may reach approximately 3 µm*3 µm. A degree of improvement of optical coupling quality is equally limited, area overheads of the first optical chip 1000A are increased due to adding of the SSC structure formed by the ridge waveguide 120A, and an insertion loss of the SSC structure is also increased by 0.5 dB to 1 dB. Precision of a III-V technique is also poor, and adding the SSC structure also reduces a yield rate of the first optical chip 1000A.

For example, the manner shown in FIG. 7 may be applied to the SiPh-based first optical chip 1000A. An SiPh technique is slightly better than the III-V material technique, so that mode expansion of the first optical chip 1000A can reach a degree of 9 µm*9 µm, thereby improving coupling quality to some extent. In this way, more packaging and coupling techniques are simplified. However, in the SiPh technique, an insertion loss of the SSC is 0.2 dB to 0.5 dB, and a large-sized mode expansion involves a more complex processing technique, affecting a yield rate of the first optical chip 1000A. In addition, a coupling technique is still required between the first optical chip 1000A and the first fiber fiber1, and a complex optical chip coupling technique still exists. In comparison with a packaging technique of an electronic chip, high costs and area overheads still exist.

In some possible implementations, an SSC structure for mode expansion may be disposed inside the first optical chip 1000A.

For example, as shown in FIG. 8A, for the first optical chip 1000A based on a III-V material (for example, an InP material), a plurality of stacked structures may be processed at a quantum well layer of the first die substrate 100A of the first optical chip 1000A to form the SSC based on a taper structure. Light beam leakage is implemented by using the taper structure, to perform mode expansion. In this manner, maximum mode expansion of 3 µm*3 µm can also be implemented, and a technical problem of forming the SSC based on the ridge waveguide 120A in the embodiment in FIG. 7 also exists.

For example, as shown in FIG. 8B, for the SiPh-based first optical chip 1000A, light beam leakage may be implemented inside the first optical chip 1000A based on a CTL structure. A trident (trident) structure for light beam leakage is processed inside the first optical chip 1000A, to form the SSC. In this implementation, maximum mode expansion of 9 µm*9 µm can be implemented. However, a related problem in the SiPh-based embodiment shown in FIG. 7 also exists.

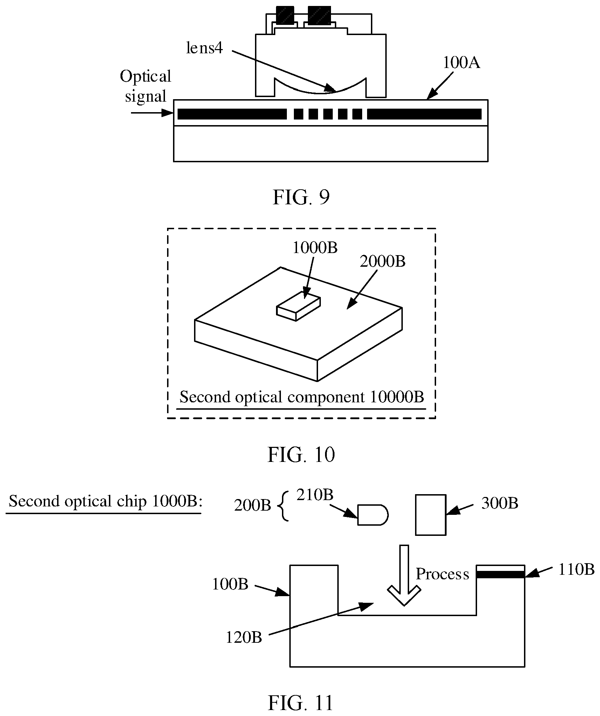

In some possible implementations, as shown in FIG. 9, in a process of manufacturing a wafer of the first optical chip 1000A, when a die array is etched, a photoetching microlens lens4 structure may be etched on an upper surface of the first die substrate 100A based on an optical etching technology. The photoetching microlens lens4 obtained through etching is used to implement light spot shaping, so as to perform mode expansion. A maximum mode expansion degree of this technique can reach 30 µm*30 µm or above. However, in the photoetching technique, only a photoetching microlens lens4 of a simple shape can be formed, and a light spot shaping capability is poor. In addition, in this technique, the photoetching microlens lens4 can be processed only on the top surface of the first die substrate 100A, that is, this technique can satisfy only an application scenario of grating coupling (namely, vertical coupling), and cannot satisfy an application scenario of edge coupling (namely, port coupling). However, the edge coupling is a mainstream optical chip coupling manner. This also makes an application scenario of the embodiment shown in FIG. 9 more limited.

In conclusion, in embodiments shown in FIG. 7, FIG. 8A and FIG. 8B, and FIG. 9, mode expansion of the beam waist mode field is implemented based on the SSC, to improve coupling efficiency, thereby simplifying a coupling technique and a coupling structure. However, on a basis of increasing a chip area and costs, these techniques have limited improvement on coupling efficiency, and there is no way to greatly reduce or even omit a coupling technique.

In some possible implementations, to greatly reduce a coupling technique of the optical chip, or even omit the coupling technique of the optical chip, the optical component may be a second optical component. As shown in FIG. 10, the second optical component 10000B includes a second optical chip 1000B and a mounting substrate 2000B. The second optical chip 1000B is mounted on the mounting substrate 2000B. As shown in FIG. 11, the second optical chip 1000B includes a second die substrate 100B, at least one 3D printing lens 200B, and a built-in optical processing component 300B. A waveguide 110B is disposed on the second die substrate 100B. An avoidance groove 120B is formed on an outer surface of the second die substrate 100B. The at least one 3D printing lens 200B includes an inner lens 210B. The inner lens 210B and the built-in optical processing component 300B are disposed in the avoidance groove 120B, and the inner lens 210B is coupled to the second die substrate 100B or the built-in optical processing component 300B. The inner lens 210B is configured to: shape an optical signal, and perform transmission of the optical signal with the waveguide 110B and/or the built-in optical processing component 300B.

In the embodiment shown in FIG. 11 of this application, when the second optical chip 1000B is processed, the avoidance groove 120B is formed on the outer surface of the second die substrate 100B of the second optical chip 1000B through processing, a conventional external discrete component (for example, the first external discrete component 2000A described in the embodiment of the first optical chip 1000A) is disposed in the second optical chip 1000B as the built-in optical processing component 300B, and the at least one 3D printing lens 200B is processed in the avoidance groove 120B, so that the 3D printing lens 200B is used to perform light spot shaping on an optical signal, and implement transmission of the optical signal between the 3D printing lens 200B, and the waveguide 110B and/or the built-in optical processing component 300B. According to this embodiment of this application, the external discrete component in a conventional technology is processed in the second optical chip 1000B as the built-in optical processing component 300B, and the at least one 3D printing lens 200B is generated in the avoidance groove 120B based on a 3D printing (3D printing) technology. Optical transmission between the optical processing component 300B inside the second optical chip 1000B and the waveguide 110B is implemented through the 3D printing lens 200B. Through the foregoing operations, a coupling technique originally required by the built-in optical processing component 300B and a corresponding packaging coupling structure may be directly omitted. After the coupling technique of the built-in optical processing component 300B is omitted, a cost size of the second optical chip 1000B may be greatly reduced, and miniaturization and high integration of the second optical chip 1000B are implemented. In addition, this solution may further implement that optical chip packaging and electronic chip packaging share a technology platform.

In some possible implementations, inner lenses 210B of different shapes may be manufactured by using a 3D printing technology.

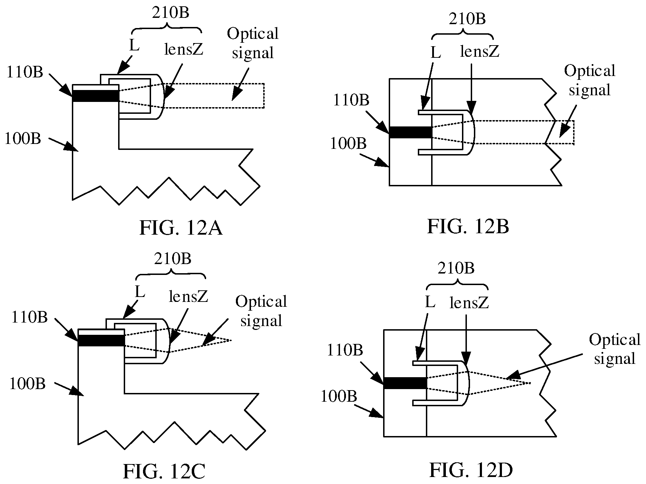

For example, as shown in FIG. 12A to FIG. 12D, the inner lens 210B includes a connection portion L and a shaping lens lensZ. The connection portion L is configured to: mount and couple the shaping lens lensZ to the second die substrate 100B or the built-in optical processing component 300B in a fastening manner. The shaping lens lensZ is configured to shape a transmitted optical signal. In some examples, as shown in FIG. 12A and FIG. 12B, for example, the inner lens 210B is mounted on the second die substrate 100B, and an optical signal output by the waveguide 110B on the second die substrate 100B is a divergence optical signal. FIG. 12A is a schematic cross-sectional view, and FIG. 12B is a top view. The shaping lens lensZ of the inner lens 210B may shape the divergent optical signal into a parallel optical signal. In some examples, as shown in FIG. 12C and FIG. 12D, for example, the inner lens 210B is mounted on the second die substrate 100B, and an optical signal output by the waveguide 110B on the second die substrate 100B is a divergence optical signal. FIG. 12C is a schematic cross-sectional view, and FIG. 12D is a top view. The waveguide 110B transmits the divergence optical signal to the inner lens 210B through a spatial medium. The shaping lens lensZ of the inner lens 210B may shape the divergent optical signal into a converged optical signal. FIG. 12A to FIG. 12D are a description of receiving, by the inner lens 210B, an optical signal transmitted by the waveguide 110B. Although not shown in the accompanying drawings, similarly, the inner lens 210B may alternatively be configured to: shape an optical signal and then transmit the shaped optical signal to the waveguide 110B.

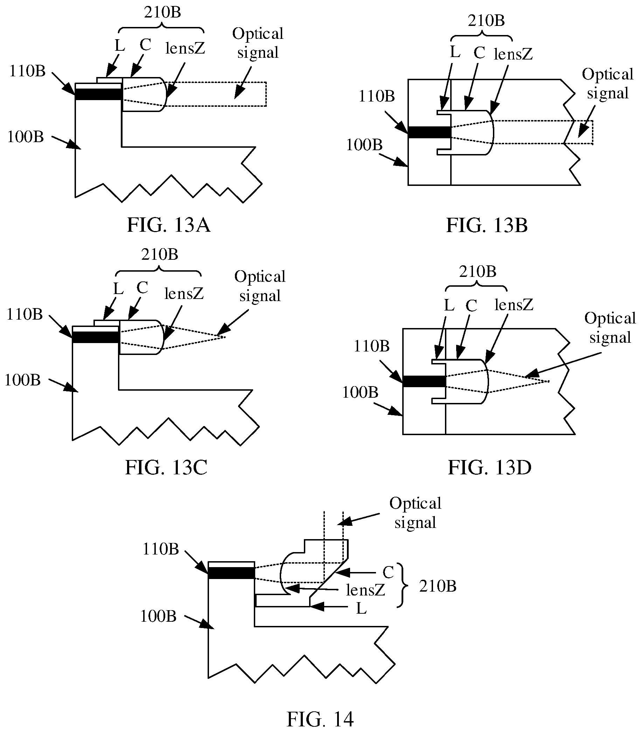

For example, as shown in FIG. 13A to FIG. 13D, the inner lens 210B includes a connection portion L, a transmission portion C, and a shaping lens lensZ. The shaping lens lensZ of the inner lens 210B is coupled to the corresponding transmission portion C. The transmission portion C and/or the shaping lens lensZ of the inner lens 210B are/is further coupled to the second die substrate 100B or the built-in optical processing component 300B through the connection portion L. The connection portion L is configured to: mount and couple the shaping lens lensZ to the second die substrate 100B or the built-in optical processing component 300B in a fastening manner. The transmission portion C is used as a transmission medium between the shaping lens lensZ and the waveguide 110B. The shaping lens lensZ is configured to shape a transmitted optical signal. In some examples, as shown in FIG. 13A and FIG. 13B, for example, the inner lens 210B is mounted on the second die substrate 100B. FIG. 13A is a schematic cross-sectional view, and FIG. 13B is a top view. An optical signal output by the waveguide 110B on the second die substrate 100B is a divergence optical signal. The inner lens 210B transmits the transmitted optical signal to the shaping lens lensZ of the inner lens 210B by using the transmission portion C as the transmission medium. The shaping lens lensZ of the inner lens 210B may shape the divergent optical signal into a parallel optical signal. In some examples, as shown in FIG. 13C and FIG. 13D, for example, the inner lens 210B is mounted on the second die substrate 100B, and an optical signal output by the waveguide 110B on the second die substrate 100B is a divergence optical signal. The waveguide 110B transmits the divergent optical signal to the shaping lens lensZ of the inner lens 210B by using the transmission portion C as the medium. The shaping lens lensZ of the inner lens 210B may shape the divergent optical signal into a converged optical signal. FIG. 13A to FIG. 13D are a description of receiving, by the inner lens 210B, an optical signal transmitted by the waveguide 110B. Although not shown in the accompanying drawings, similarly, the inner lens 210B may alternatively be configured to: shape an optical signal and then transmit the shaped optical signal to the waveguide 110B.

Although not shown in the accompanying drawings, for a technical principle and beneficial effects of mounting the inner lens 210B on the built-in optical processing component 300B, refer to related descriptions of mounting the inner lens 210B on the second die substrate 100B in embodiments shown in FIG. 12A to FIG. 12D and FIG. 13A to FIG. 13D. Details are not described herein again.

In embodiments shown in FIG. 12A to FIG. 12D and FIG. 13A to FIG. 13D and related text descriptions thereof in this application, an optical signal is shaped by the shaping lens lensZ. Connection strength and structural strength of the inner lens 210B are increased by using the connection portion L, to improve technique reliability. In addition, in some scenarios, to enable the inner lens 210B to bring better coupling efficiency and the like, a size of the inner lens 210B may be increased, to increase a size of a beam waist mode field. When the size of the inner lens 210B is increased, using the connection portion L can ensure stability and reliability of mounting the inner lens 210B.

In some possible implementations, based on the embodiment shown in FIG. 13A to FIG. 13D, the transmission portion C may be processed into different shapes. In some examples, the transmission portion C may be a straight-through structure shown in FIG. 13A to FIG. 13D. In some examples, as shown in FIG. 14, the transmission portion C may be a structure with light refraction. In this embodiment of this application, based on a 3D printing technology, a result of the inner lens 210B may be more flexibly designed, to meet optical transmission requirements in different scenarios. For example, different built-in optical processing components 300B may be more flexibly designed at positions in the avoidance groove 120B. Alternatively, in the avoidance groove 120B, the inner lens 210B may be optically coupled to the waveguide and/or the built-in optical processing component 300B in a manner of grating coupling or edge coupling, or the like. It should be noted that, when the transmission portion C structure and the shaping lens lensZ structure are generated by using a 3D printing technology, there is a connection structure between the transmission portion C and a mounted component, for example, the connection structure may be represented as a form of a small grip or the like that is bonded to the built-in optical processing component 300B or the second die substrate 100B. However, such a small grip form is not a structure that is of the connection portion L and that is described in this embodiment of this application. The connection portion L in this embodiment of this application is a connection fastening structure that is obviously longer than a small grip structure.

In some possible implementations, the inner lens 210B may alternatively be mounted on the second die substrate 100B in a manner other than the connection portion C. For example, a mounting groove opening is processed on the second die substrate 100B to fasten the inner lens 210B. However, in this embodiment of this application, in embodiments shown in FIG. 12A to FIG. 12D, FIG. 13A to FIG. 13D, and FIG. 14, a manner of generating the connection portion L based on a 3D printing technology can greatly increase a bonding area between the inner lens 210B and the die substrate 100B, and a quantity of bonding surfaces is increased from 1 to 2, so that a bonding force between the inner lens 210B and the die substrate 100B can be greatly increased, and long-term reliability of the inner lens 210B can also be greatly improved.

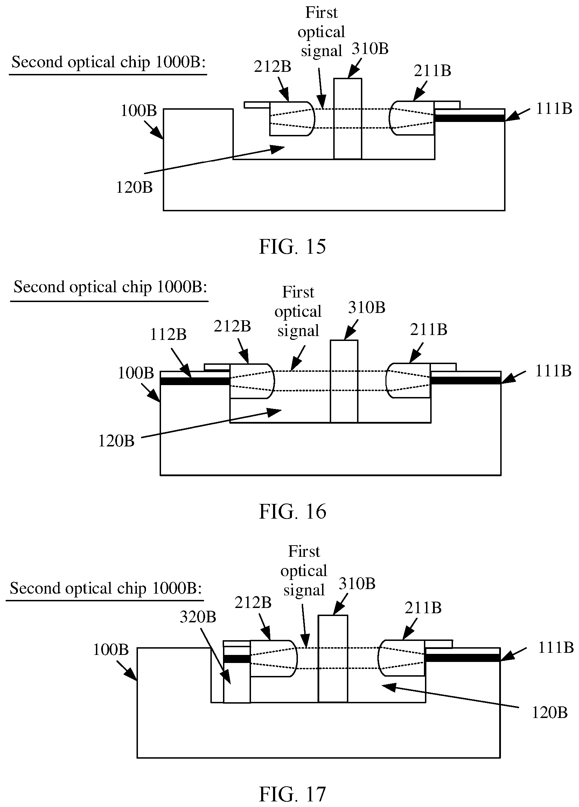

In some possible implementations, when the built-in optical processing component 300B in the embodiment shown in FIG. 11 may include a passive optical component, as shown in FIG. 15, the inner lens 210B includes a first inner lens 211B and a second inner lens 212B. The waveguide 110B includes a first waveguide 111B. A first end of the first waveguide 111B extends from the second die substrate 100B to a first inner side surface of the avoidance groove 120B. The first inner lens 211B is disposed at a position that corresponds to the first waveguide 111B and that is on the first inner side surface. The passive optical component 310B is disposed in the avoidance groove 120B and is located in an optical transmission path between the second inner lens 212B and the first inner lens 211B. The second inner lens 212B, the passive optical component 310B, the first inner lens 211B, and the first waveguide 111B sequentially form a transmission path of a first optical signal. In this embodiment of this application, the passive optical component 310B is configured to perform specific optical processing on an optical signal. In this case, two lenses, namely, the first inner lens 211B and the second inner lens 212B, may be disposed in the avoidance groove 120B. The second inner lens 212B shapes the first optical signal, and transmits the shaped first optical signal to the passive optical component 310B. After performing optical processing on the first optical signal, the passive optical component 310B transmits the first optical signal after optical processing to the first inner lens 211B. The first inner lens 211B performs light spot shaping processing on the first optical signal after optical processing, and transmits the processed first optical signal to the first waveguide 111B. The first waveguide 111B carries the input first optical signal, and on the second die substrate 100B of the second optical chip 1000B, the first waveguide 111B continues to perform subsequent transmission and processing.

For example, in the embodiment shown in FIG. 15, the second inner lens 212B may obtain the first optical signal from the second die substrate 100B. In this case, as shown in FIG. 16, a second waveguide 112B is further disposed on the second die substrate 100B. A first end of the second waveguide 112B extends from the second die substrate 100B to a second inner side surface of the avoidance groove 120B. The second inner lens 212B is disposed at a position corresponding to the first end of the second waveguide 112B, and the second waveguide 112B is configured to transmit the first optical signal to the second inner lens 212B. In this embodiment of this application, the second waveguide 112B of the second die substrate 100B transmits the first optical signal to the second inner lens 212B in the avoidance groove 120B. After that, the second inner lens 212B performs light spot shaping on the first optical signal, and then implements the optical transmission path shown in FIG. 15.

For example, in the embodiment shown in FIG. 15, the built-in optical processing component 300B may include a passive optical component and an active optical component. The second inner lens 212B may input a first optical signal from the active optical component, and implement the optical transmission path shown in FIG. 15. As shown in FIG. 17, the built-in optical processing component 300B further includes a first active optical component 320B, the first active optical component 320B is disposed in the avoidance groove 120B, and the first active optical component 320B is coupled to the second inner lens 212B. The first active optical component 320B is configured to output a first optical signal to the second inner lens 212B.

For example, in embodiments shown in FIG. 15, FIG. 16, and FIG. 17, the optical chip obtained based on the second die substrate 100B may be a silicon photonic chip. The passive optical component 310B may be a circulator, an isolator, or the like.

For example, in the embodiment shown in FIG. 17, the obtained second optical component 10000B may be a silicon photonic modulator, and the silicon photonic modulator may be configured to implement a client-side optical modulator. The passive optical component 310B may be an isolator, and the first active optical component 320B may be a distributed feedback (distributed feedback, DFB) laser of a III-V technique.

In some possible implementations, in embodiments shown in FIG. 15, FIG. 16, and FIG. 17, the second inner lens 212B is specifically configured to shape the first optical signal into parallel light. A beam waist mode field of the second inner lens 212B is greater than a first value, and the first value satisfies: a collimation distance of the first optical signal that is the parallel light is greater than a distance between the second inner lens 212B and the passive optical component 310B. In this embodiment of this application, how to implement optical transmission and optical processing between the inner lens 210B and the passive component in the avoidance groove 120B is a design difficulty. A conventional 3D printing lens usually has a design size between 3 µm and 10 µm, and is used to simplify coupling between an optical chip and a fiber. There is no idea or requirement in the industry for increasing the size of the 3D printing lens, and there is no idea or requirement for using the 3D printing lens to improve integration of an optical chip. In addition, the 3D printing lens is usually applied to coupling alignment design of optical coupling between an optical chip and an external discrete component. In a process of implementing optical transmission based on a Gaussian light beam by using a lens, a laser light beam will diverge horizontally when the laser beam propagates in the space. When parallel light is obtained through shaping by the lens structures shown in FIG. 12A to FIG. 12D, FIG. 13A to FIG. 13D, and FIG. 14, an optical signal is represented as the parallel light only within a specific collimation distance, but still presents a divergence characteristic beyond the collimation distance. The collimation distance may be considered as a Rayleigh distance (or referred to as a Rayleigh length) of the Gaussian light beam. A Rayleigh length (Rayleigh range) of the laser light beam is a distance between a beam waist (in a direction of propagation) and a position at which a light beam radius increases by a factor of a square root of 2. For a light beam with a circular cross section, this corresponds to a point present when a mode area of the light beam becomes twice. A beam waist mode field is a minimum light spot mode field of the optical signal. Therefore, using the conventional 3D printing lens cannot implement optical transmission and optical processing between the inner lens 210B and the passive component in the avoidance groove 120B. However, in embodiments shown in FIG. 15, FIG. 16, and FIG. 17 of this application, when parallel light needs to be transmitted to the passive optical component 310B through the second inner lens 212B, a size of the second inner lens 212B may be expanded, to obtain a larger beam waist mode field, for example, a beam waist mode field of 15 µm, 20 µm, 50 µm, or more. In this manner, a Rayleigh length of 1200 µm or more may be obtained, and a collimation distance of the parallel light completely meets a design requirement within an avoidance region. In this embodiment of this application, application of disposing the passive optical component 310B in the avoidance groove 120B can be implemented. In addition, the connection portion L in embodiments shown in FIG. 12A to FIG. 12D, FIG. 13A to FIG. 13D, and FIG. 14 is designed on the inner lens 210B, so that reliability and stability of the inner lens 210B can be ensured when the size of the inner lens 210B is increased.

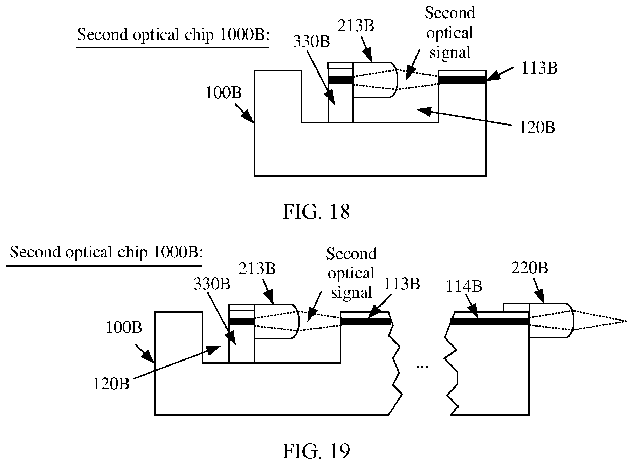

In some possible implementations, the built-in optical processing component 300B in the embodiment shown in FIG. 11 may include an active optical component. For example, as shown in FIG. 18, the built-in optical processing component 300B includes a second active optical component 330B. The inner lens 210B includes a third inner lens 213B. The waveguide 110B includes a third waveguide 113B. A first end of the third waveguide 113B extends from the second die substrate 100B to an inner side surface of the avoidance groove 120B. The third inner lens 213B is mounted on the second active optical component 330B and is located at a position corresponding to the first end of the third waveguide 113B. The second active optical component 330B is configured to output a second optical signal to the third inner lens 213B. The third inner lens 213B is configured to: shape the second optical signal, and output the shaped second optical signal to the first end of the third waveguide 113B. In this embodiment of this application, another external discrete active component may be disposed in the avoidance groove 120B as an active optical component (for example, the second active optical component 330B). The second active optical component 330B generates or outputs the second optical signal to the third inner lens 213B. For example, the third inner lens 213B may shape, into converged light, the second optical signal that is output by the second active optical component 330B and that is divergence light, and transmit the second optical signal that is the converged light to the third waveguide 113B of the second die substrate 100B, and the third waveguide 113B performs processing, transmission, and the like on the carried second optical signal on the second die substrate 100B. In this embodiment of this application, by using the avoidance groove 120B and the inner lens 210B, an external discrete active component in a conventional technology can be integrated into the second optical chip 1000B as an active optical component, so that a coupling technique and a coupling structure of the active optical component are omitted, and component costs and area overheads of the optical chip are greatly reduced.

In some possible implementations, as shown in FIG. 19, the at least one 3D printing lens 200B further includes an outer lens 220B. The waveguide 110B further includes a fourth waveguide 114B. A first end of the fourth waveguide 114B extends from the second die substrate 100B to an outer side surface of the second die substrate 100B. The outer lens 220B is disposed at a position that corresponds to the first end of the fourth waveguide 114B and that is on the second die substrate 100B. The fourth waveguide 114B is configured to transmit a third optical signal to the outer lens 220B. The outer lens 220B is configured to: shape the third optical signal, and transmit the shaped third optical signal. In this embodiment of this application, the outer surface of the second die substrate 100B of the second optical chip 1000B may be implemented through the outer lens 220B.

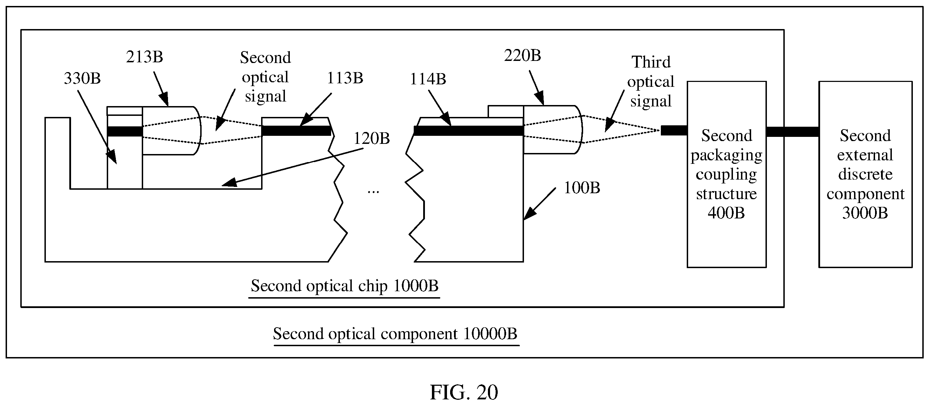

For example, as shown in FIG. 20, the second optical component 10000B may further include at least one second external discrete component 3000B. These second external discrete components 3000B are components that cannot be integrated into the second optical chip 1000B or components that can be integrated but are not integrated into the second optical chip 1000B. In this case, the second optical chip 1000B further includes a second packaging coupling structure 400B. The second optical chip 1000B is coupled to the at least one second external discrete component 3000B through the second packaging coupling structure 400B and an external second fiber fiber2. In this case, to reduce costs and area overheads that are caused by the second packaging coupling structure 400B, in this embodiment of this application, the outer lens 220B obtained by using a 3D printing technology forms an SSC, and light spot shaping and mode expansion may be performed on the third optical signal output by the fourth waveguide 114B of the second optical chip 1000B. The third optical signal after light spot shaping is aligned and transmitted to the external fiber fiber2, to implement optical signal exchange between the second optical chip 1000B and the at least one second external discrete component 3000B. The third optical signal after mode expansion has higher alignment and coupling efficiency, thereby reducing requirements for a technique and a structure of the second packaging coupling structure 400B, and reducing costs and area overheads that are caused by packaging and coupling.

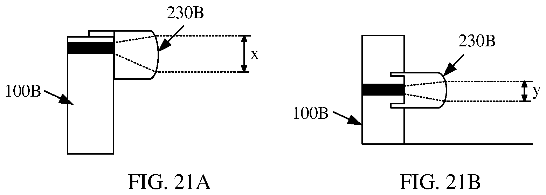

In some possible implementations, as shown in FIG. 21A and FIG. 21B, the outer lens 220B is an elliptical lens structure. FIG. 21A is a side view of the outer lens 220B, and FIG. 21B is a top view of the outer lens 220B. In the figure, x is a vertical light spot diameter of the outer lens 220B, y is a horizontal light spot diameter of the outer lens 220B, and x is not equal to y. In this embodiment of this application, usually, a horizontal light field confinement factor and a vertical light field confinement factor of a waveguide of an optical chip are different, so that a light exit light spot of the optical chip is elliptical rather than perfectly circular. However, a fiber light spot of a common external fiber is perfectly circular. Therefore, there is an additional coupling insertion loss between the light exit light spot of the waveguide of the optical chip and a coupled fiber light spot. The outer lens 220B is disposed as an elliptical lens structure whose vertical curvature and horizontal curvature are different, so that the third optical signal that is of an elliptical light spot and that is output by the fourth waveguide 114B of the second optical chip 1000B is converted into the third optical signal of a perfectly circular light spot, and the third optical signal of the perfectly circular light spot is transmitted to the second fiber fiber2, to reduce a coupling insertion loss and improve coupling efficiency.

For example, based on different actual designs and application requirements, the second optical chip 1000B may transmit an optical signal to the external discrete component through the outer lens 220B, or may obtain an optical signal from the external discrete component through the outer lens 220B.

For technical principles and technical effects of a design structure and the like of the outer lens 220B, refer to related descriptions in embodiments of the inner lens 210B shown in FIG. 12A to FIG. 12D, FIG. 13A to FIG. 13D, and FIG. 14. Details are not described herein again. The outer lens 220B is coupled to an outer edge of the second die substrate 100B through the connection portion L, to implement edge coupling.

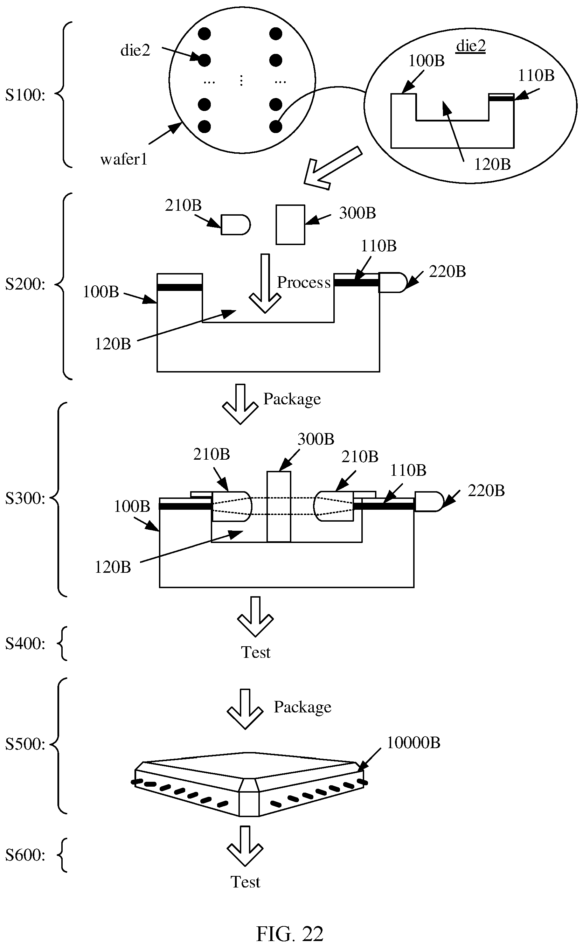

An embodiment of this application further provides a manufacturing method, for manufacturing the second optical component 10000B or the second optical chip 1000B including the structures shown in FIG. 11, FIG. 12A to FIG. 12D, FIG. 13A to FIG. 13D, FIG. 14, FIG. 15, FIG. 16, FIG. 17, FIG. 18, FIG. 19, FIG. 20, and FIG. 21A and FIG. 21B. As shown in FIG. 22, the manufacturing method includes operations of step S100 to step S600.

S100: Etch a die array on a wafer wafer1.

In this embodiment of this application, as shown in FIG. 22, the die array includes a plurality of second dies die2. A waveguide 110B is disposed on a second die substrate 100B of each second die die2. An avoidance groove 120B is formed on an outer surface of the second die substrate 100B.

In some possible implementations, as shown in FIG. 15, when the built-in optical processing component 300B includes the passive optical component 310B, the waveguide 110B obtained in an architecture of the step S100 stage includes a first waveguide 111B. A first end of the first waveguide 111B extends from the second die substrate 100B to a first inner side surface of the avoidance groove 120B.

In some possible implementations, as shown in FIG. 16, the second waveguide 112B may be further processed on the second die substrate 100B. A first end of the second waveguide 112B extends from the second die substrate 100B to a second inner side surface of the avoidance groove 120B. Based on different transmission turning directions, coupling manners, and the like that are of an inner lens 210B and that are used during design, the first inner side surface and the second inner side surface may be opposite surfaces (for example, the inner lens 210B is in an edge coupling form in straight-through transmission), the first inner side surface and the second inner side surface may be adjacent surfaces (for example, the inner lens 210B is in a grating coupling form or an edge coupling form in turning transmission), or the like.

In some possible implementations, before the operation of step S100 is performed, the wafer wafer1 may be further disorganized, that is, the die array is cut into rows (or columns) of bars, and each bar includes a plurality of second dies die2. Then, a subsequent operation is performed on the plurality of second dies die2 on each bar.

S200: Mount the built-in optical processing component 300B and process a 3D printing lens 200B.

In some examples, when a specific 3D printing lens 200B is mounted on the second die substrate 100B, at least one 3D printing lens 200B may be first etched based on a 3D printing technology, and then the built-in optical processing component 300B is mounted in the avoidance groove 120B. Alternatively, the built-in optical processing component 300B may be first mounted in the avoidance groove 120B, and then at least one 3D printing lens 200B is etched on the second die substrate 100B based on a 3D printing technology.

In some examples, when a specific 3D printing lens 200B is disposed on the built-in optical processing component 300B, the built-in optical processing component 300B may be first mounted in the avoidance groove 120B, and then the at least one 3D printing lens 200B is etched based on a 3D printing technology.

In some possible implementations, as shown in FIG. 15, when the built-in optical processing component 300B includes the passive optical component 310B, the waveguide 110B obtained in the architecture of the step S100 stage includes the first waveguide 111B. The first end of the first waveguide 111B extends from the second die substrate 100B to the first inner side surface of the avoidance groove 120B. In this case, the following operations are specifically performed in step S200: etching a first inner lens 211B at a position that corresponds to the first waveguide 111B and that is on the first inner side surface; and mounting the passive optical component 310B in the avoidance groove 120B and in an optical transmission path between a second inner lens 212B and the first inner lens 211B, where the second inner lens 212B, the passive optical component 310B, the first inner lens 211B, and the first waveguide 111B form a transmission path of a first optical signal in a transmission sequence.

In the embodiment of step S200 in this application, the inner lens 210B, an outer lens 220B, and the built-in optical processing component 300B may be processed and manufactured. Based on the operations described in the foregoing embodiments, a structure of the second die substrate 100B, a structure of the 3D printing lens 200B, and a structure of the built-in optical processing component 300B in FIG. 12A to FIG. 12D, FIG. 13A to FIG. 13D, FIG. 14, FIG. 15, FIG. 16, FIG. 17, FIG. 18, FIG. 19, FIG. 20, and FIG. 21A and FIG. 21B may be obtained through processing in step S200 based on different integration designs of the second optical chip 1000B. For a specific processing structure, refer to the text descriptions of the foregoing hardware-related embodiments. Details are not described herein again.

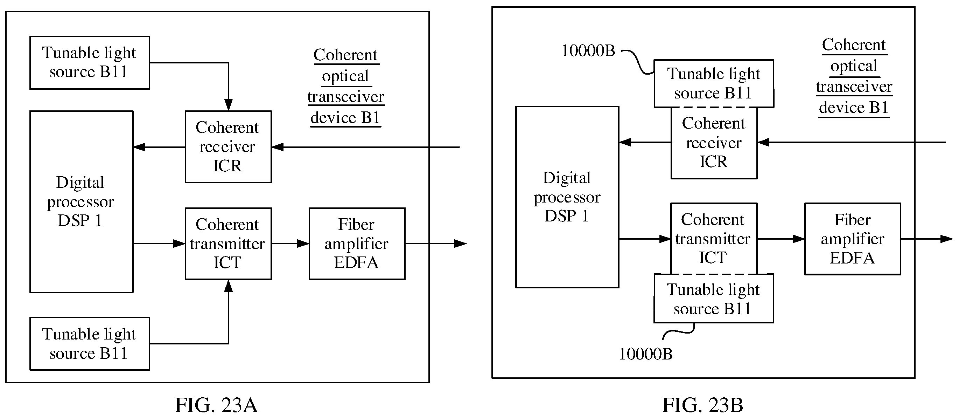

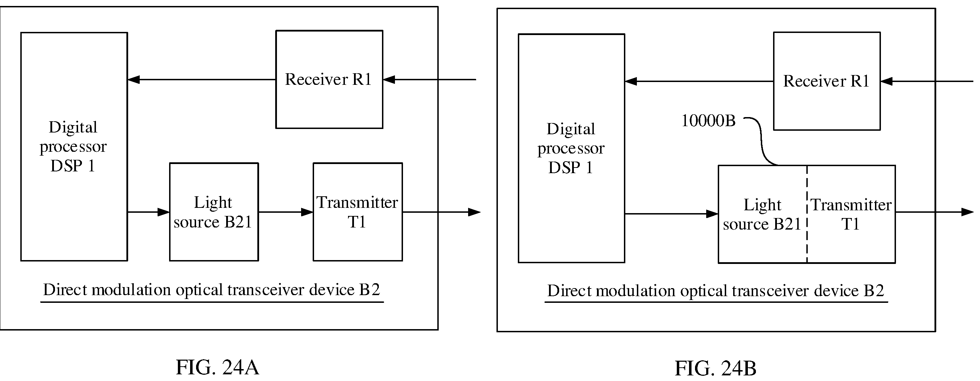

In some possible implementations, an example in which the second optical component 10000B is an optical signal transceiver device is used. As shown in FIG. 23A and FIG. 23B and FIG. 24A and FIG. 24B, FIG. 23A is a diagram of an architecture of a coherent optical transceiver device B1 in coherent optical communication. In the figure, the coherent optical transceiver device B1 includes a digital processor DSP 1, tunable light sources B11, a coherent receiver ICR, a coherent transmitter ICT, a fiber amplifier EDFA, and the like. In some examples, for example, the second optical chip 1000B is an optical chip in the coherent receiver ICR. A corresponding tunable light source B11 may be integrated into the second optical chip 1000B as an active optical component 320B, and a structure shown in FIG. 23B is obtained through packaging. There are only three optical components in FIG. 23B. Compared with five optical components in FIG. 23A, two fusion splicing points may be omitted. Alternatively, some or all of components such as the tunable light source B11, the coherent receiver ICR, and the coherent transmitter ICT are integrated and manufactured into a second optical component 10000B or the like, to further reduce fusion splicing points between discrete optical components. In some examples, FIG. 24A is a diagram of an architecture of a direct modulation optical transceiver device B2 in direct modulation optical communication. In the figure, the direct modulation optical transceiver device includes a digital processor DSP 1, a receiver R1, a light source B21, and a silicon photonic modulator T1. In this embodiment of this application, the light source B21 and the silicon photonics modulator T1 may be integrated to obtain the second optical component 10000B through manufacturing, so as to obtain an architecture in FIG. 24B. In the architecture in FIG. 24B, two discrete optical components are integrated into one second optical component 10000B, and one fusion splicing point may be omitted.

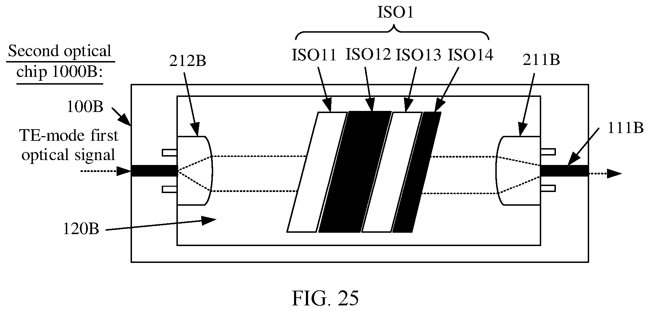

For example, in the embodiment shown in FIG. 16, that a passive optical component 310B of a polarization-dependent optical isolator (isolator, ISO) is integrated on the second optical chip 1000B based on an SiPh technique is used as an example. As shown in FIG. 25, the first optical isolator ISO1 sequentially includes a first polarizer ISO11, a first Faraday rotator ISO12, a second polarizer ISO13, and a half-wave plate ISO14. The second waveguide 112B used as an output waveguide is correspondingly optically coupled to the second inner lens 212B, and the first waveguide 111B used as an output waveguide is correspondingly optically coupled to the first inner lens 211B. The second inner lens 212B obtains, through mode expansion, a Rayleigh length that is long enough, to shape divergence light output by the second waveguide into parallel light and transmit the parallel light to the optical isolator ISO1. Along the optical transmission path, the first inner lens 210B shapes the parallel light into converged light and transmits the converged light to the first waveguide 111B. When an optical signal is transmitted in a light entrance direction, a polarization state of the optical signal is a transverse electric (transverse electric, TE) mode, a light entrance polarization direction of forward light transmission is the same as a polarization direction of the first polarizer ISO11 and the second polarizer ISO13, and a transmission insertion loss is small. However, during reverse light transmission, at the first polarizer ISO11 and the second polarizer ISO13, a polarization direction of the optical signal is orthogonal to a polarization state of a light beam, so that reverse light transmission isolation can be implemented.

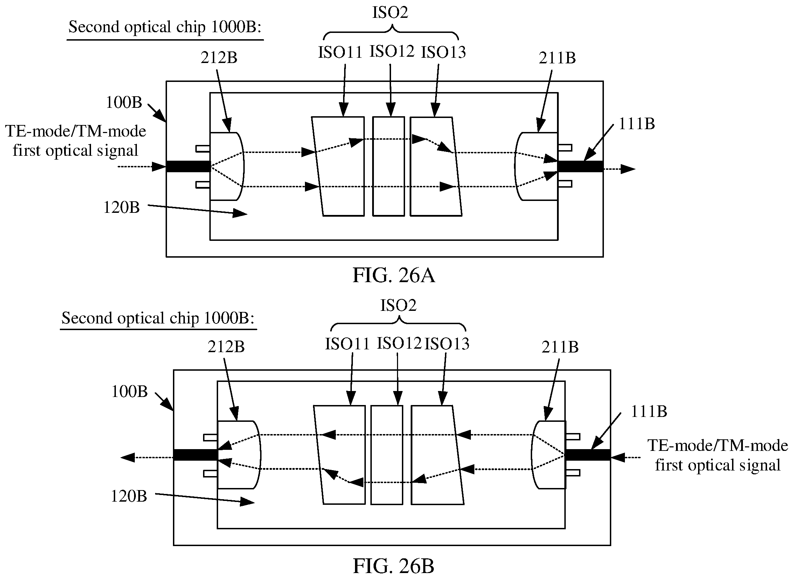

For example, the passive optical component 310B described in FIG. 16 is a second optical isolator ISO2 in FIG. 26A and FIG. 26B. The second optical isolator ISO2 is a polarization-independent optical isolator, and sequentially includes a first yttrium orthovanadate ISO21, a second Faraday rotator ISO22, and a second yttrium orthovanadate ISO23. As shown in FIG. 26A, the second inner lens 220B may transmit an optical signal to the first inner lens 210B through the second optical isolator ISO2. As shown in FIG. 26B, the first inner lens 210B may also transmit an optical signal to the second inner lens 220B through the second optical isolator ISO2.

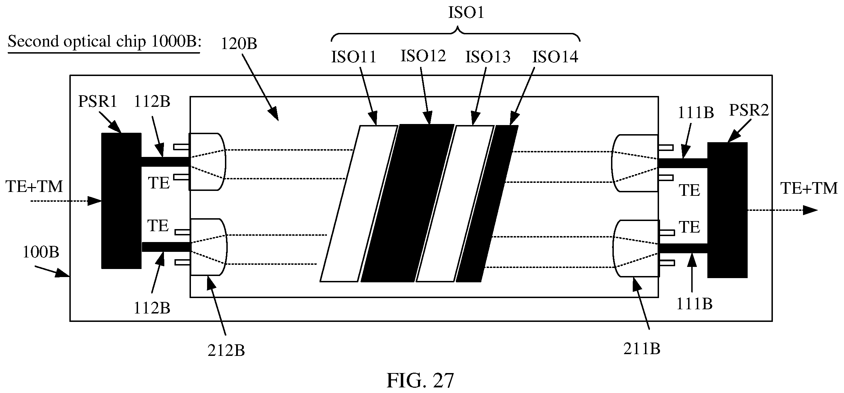

For example, in the embodiment shown in FIG. 16, a plurality of optical transmission paths may be formed by using the passive optical component 310B. For example, a plurality of optical signals are obtained based on a polarization splitter and rotator (polarization splitter and rotator, PSR), and optical processing is separately performed on the plurality of optical signals based on the passive optical component 310B. As shown in FIG. 27, for example, the passive optical component 310B shown in FIG. 16 is the polarization-dependent first optical isolator ISO1 shown in FIG. 25. In the second die substrate 100B of the second optical chip 1000B, a first polarization splitter and rotator PSR1 and a second polarization splitter and rotator PSR2 are further processed. The first polarization splitter and rotator PSR1 may convert and split a light beam of a TE mode and a transverse magnetic (transverse magnetic, TM) mode into two TE-mode optical signals, and respectively transmitted the two TE-mode optical signals to two second waveguides 112B. The two TE-mode optical signals are transmitted to the second polarization splitter and rotator PSR2 through the two second waveguides 112B, two second inner lenses 220B, the first optical isolator ISO1, two first inner lenses 210B, and two first waveguides 111B. The second polarization splitter and rotator PSR2 combines the two TE-mode optical signals to obtain a light beam of a TE mode and a TM mode.

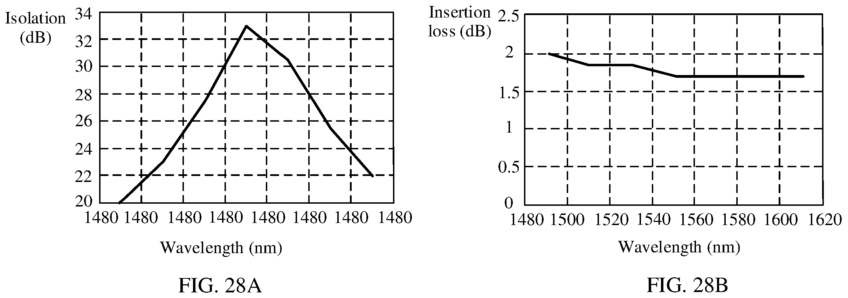

For example, the polarization-dependent ISO in FIG. 25 and FIG. 27 is used as an example. A light entrance polarization direction of forward light transmission is completely the same as a polarization direction of a polarizer, and a transmission insertion loss L is small. During reverse light transmission, at a P1 polarizer, a polarization direction of a light beam is orthogonal to a polarization state of the light beam, so that reverse light transmission isolation is finally implemented. FIG. 28A is an effect diagram of isolation, and FIG. 28B is an effect diagram of a wavelength-dependent loss (wavelength-dependent loss, WDL) between two waveguides. For example, if an optical signal is in a C band (C band), isolation is greater than 20 dB. In addition, an overall insertion loss level between the first waveguide 111B and the second waveguide 112B may be controlled within 2 dB. It can be learned that, when the second optical chip 1000B is processed based on the manufacturing method shown in FIG. 22, an optical capability can be basically equivalent to performance of a fiber-type external isolator when costs and a size are greatly reduced.

In FIG. 24A and FIG. 24B, FIG. 25, FIG. 26A and FIG. 26B, FIG. 27, and FIG. 28A and FIG. 28B, an example in which the second optical chip 1000B is used in an optical communication scenario is used for description. However, similarly, the solutions described in this application may also be applied to a scenario of optical signal-based processing, for example, a fronthaul network in the field of wireless communication technologies, an industrial laser, a bump laser, an optical sensing field, an optical measurement field, and a medical imaging field.

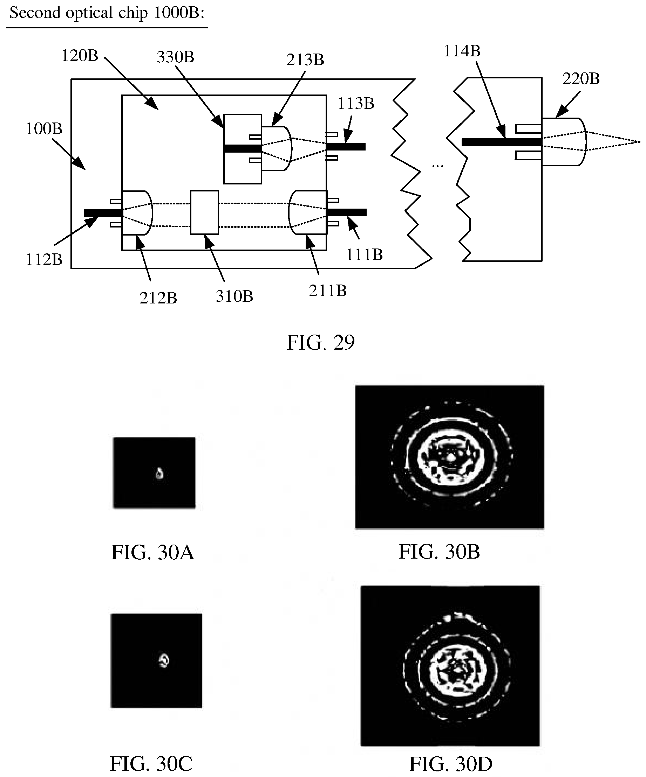

For example, FIG. 29 is a top view of a second die substrate 100B of a second optical chip 1000B. A plurality of 3D printing lenses 200B may be disposed on the second optical chip 1000B. The plurality of 3D printing lenses 200B include an inner lens coupled to a built-in optical processing component 300B (including a passive optical component 310B, a first active optical component 320B, a second active optical component 330B, or the like), and also include an outer lens configured to implement coupling to a second external discrete component 3000B, and the like. In this embodiment of this application, costs and component area overheads of the optical chip can be greatly reduced based on different lenses.

For example, FIG. 30A is a diagram of simulation of a beam waist mode field of a conventional SSC based on a III-V technique in the first optical component 10000A, and a simulation result of the beam waist mode field of the conventional SSC is 3.4 µm*2.7 µm. FIG. 30B is a diagram of simulation of a beam waist mode field of a 3D printing technique based on a III-V technique in the second optical component 10000B, and a simulation result of the beam waist mode field of the 3D printing technique is 40.4 µm*45.8 µm. FIG. 30C is a diagram of simulation of a beam waist mode field of a conventional SSC based on an SiPh technique in the first optical component 10000A, and a simulation result of the beam waist mode field of the conventional SSC is 9 µm*7.5 µm. FIG. 30D is a diagram of simulation of a beam waist mode field of a 3D printing technique based on an SiPh technique in the second optical component 10000B, and a simulation result of the beam waist mode field of the 3D printing technique is 47 µm*61.4 µm. Compared with the SSCs of a III-V technique and an SiPh technique, the 3D printing lens obtained based on 3D printing in this embodiment of this application may have a mode expansion capability 20 times or more than 20 times that of the SSCs. Based on a 3D printing technique, a chip area of an optical chip does not need to be occupied, degrees of freedom for processing and design of a lens is higher, and a yield rate of optical chip manufacturing is not affected.

Table 1 shows comparison between parameters present when light spot shaping and mode expansion are performed based on a III-V technique, an SiPh technique, and a 3D printing technique.

**Table 1**

| | III-V material technique | SiPh technique | 3D printing (including a III-V technique and an SiPh technique) |
|---|---|---|---|
| Ultimate mode expansion capability | Approximately 3 µm*3 µm | Approximately 9 µm*9 µm | Greater than 50 µm*50 µm |
| Rayleigh length (collimation light spot length) | 4.6 µm | 41 µm | 1200 µm |
| Elliptical light beam shaping | Not feasible | Not feasible | Feasible |
| Length that is of the chip and that is occupied by coupling | ~300 µm | ~600 µm | 0 |
| Chip yield rate loss | ~3% | ~3% | 0 |
| Insertion loss | 0.3 dB to 1 dB | 0.3 dB | <0.3 dB |

In some possible implementations, before or after step S200, the second die die2 may be tested, to select a die that passes the detection.

In some possible implementations, after structures such as the inner lens 210B, the outer lens 220B, and the built-in optical processing component 300B are processed, the die that passes the detection may be cut off from the bar or the wafer 1, to perform an operation of the subsequent step S300.

S300: Package the second die die2.

In this embodiment of this application, packaging processing is performed on the second die die2 that passes the detection, to obtain a packaged second optical chip 1000B.

In some possible implementations, when the second optical chip 1000B includes the outer lens 220B, the second optical chip 1000B needs to design a corresponding second packaging coupling structure 400B and another packaging structure for the outer lens 220B.

S400: Test the second optical chip 1000B.

In this embodiment of this application, a qualified second optical chip 1000B is selected as a final product based on a test of the second optical chip 1000B.

Based on the manufacturing method described in FIG. 22, it can be learned from the descriptions in FIG. 30A to FIG. 30D and Table 1 that when the first optical chip 1000A shown in FIG. 6A and FIG. 6B performs light spot shaping based on a dual-lens, costs and area overheads of the first optical chip 1000A may be shown in FIG. 2. However, in light spot shaping scenarios shown in FIG. 7, FIG. 8A and FIG. 8B, and FIG. 9, coupling efficiency is improved through mode expansion, and a specific coupling technique and a specific area of a coupling structure can be reduced based on FIG. 2, but a reduction degree of costs and area overheads is limited. However, in this embodiment in which the second optical chip 1000B is used in this application, on a basis of omitting a packaging coupling structure or greatly reducing an optical coupling structure, costs and integration of the second optical chip 1000B can reach or approach degrees shown in the electronic chip shown in FIG. 1A and FIG. 1B. In addition, the second optical chip 1000B in this application may further implement that optical chip packaging and electronic chip packaging share a same platform.

The second optical chip 1000B may be obtained based on the manufacturing method in step S100 to step S400. On a basis of obtaining the second optical chip 1000B, the manufacturing method in step S500 to step S600 may be further performed to obtain the second optical component 10000B.

S500: Perform packaging of the second optical component 10000B.

In some examples, when there is no second external discrete component 3000B in the second optical component 10000B, the second optical chip 1000B may be mounted on a mounting substrate 2000B, and packaging is performed to obtain the corresponding second optical component 10000B. In some examples, when there is the second external discrete component 3000B in the second optical component 10000B, the second optical chip 1000B and the second external discrete component 3000B need to be jointly mounted on the mounting substrate 2000B, to obtain the second optical component 10000B through packaging. In comparison with an optical component manufactured by using a conventional packaging technique, an area of the second optical component 10000B manufactured by using a packaging technique in this embodiment of this application is greatly reduced, and area overheads of the second optical component 10000B may be close to area overheads of the electronic chip.

S600: Test the second optical component 10000B.

Through testing of the second optical component 10000B, a qualified product is selected as a final finished product.

Embodiments of this application provide an optical chip, an optical component, a manufacturing method, an optical module, and an optical processing device. First, an avoidance groove is processed on an outer surface of a die substrate of the optical chip. An inner lens and a built-in optical processing component are disposed in the avoidance groove. A conventional external discrete component is processed in the optical chip as the built-in optical processing component, and an inner lens obtained through 3D printing is used to implement processing and exchange of an optical signal with the built-in optical processing component and/or a waveguide of the die substrate. In this manner, an original packaging coupling structure between the external discrete component and the optical chip may be omitted. This greatly reduces costs and area overheads of the optical signal, and improves a miniaturization degree and integration of the optical chip. Second, an outer lens is processed at an edge of the die substrate of the optical chip, and mode expansion is implemented by using the outer lens, to improve optical port coupling efficiency of a second optical chip. This reduces a requirement for the packaging coupling structure between the optical chip and the external discrete component, to reduce costs and area overheads. Third, the optical chip is manufactured by using the optical chip manufacturing method, so that optical chip packaging and electronic chip packaging can share a same platform. Fourth, in comparison with a conventional lens, in this application, a size of the 3D printing lens is increased, a mode expansion capability and coupling efficiency are improved, and a passive optical component is integrated into the optical chip. Fifth, in the optical chip, a connection portion is disposed in the 3D printing lens, to improve reliability and stability of the lens. Sixth, the 3D printing lens is disposed as an elliptical lens, to improve efficiency of coupling between a waveguide light spot of the optical chip and a fiber light spot outside the optical chip, so that a coupling insertion loss is reduced. Seventh, the optical component is obtained based on the optical chip, and the optical component may have all advantages and beneficial effects related to the optical chip.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed system, device, and method may be implemented in other manners. For example, the described device embodiment is merely an example. For example, division into the modules is merely logical function division and may be other division in an actual implementation. For example, a plurality of modules or components may be combined or integrated into another device, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate parts may or may not be physically separate, and parts displayed as modules may or may not be physical modules, that is, may be located in one device, or may be distributed on a plurality of devices. Some or all the modules may be selected according to actual requirements to achieve the objectives of the solutions of embodiments.

In addition, functional modules in embodiments of this application may be integrated into one device, or each of the modules may exist alone physically, or two or more modules are integrated into one device.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, a fiber, or a digital subscriber line (Digital Subscriber Line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical chip, comprising a die substrate, at least one 3D printing lens, and a built-in optical processing component, wherein a waveguide is disposed on the die substrate, an avoidance groove is formed on an outer surface of the die substrate, the at least one 3D printing lens comprises an inner lens, the inner lens and the built-in optical processing component are disposed in the avoidance groove, the inner lens is coupled to the die substrate or the built-in optical processing component, and the inner lens is configured to:
shape an optical signal, and perform transmission of the optical signal with the waveguide and/or the built-in optical processing component.

2. The optical chip according to claim 1, wherein the built-in optical processing component comprises a passive optical component, the inner lens comprises a first inner lens and a second inner lens, and the waveguide comprises a first waveguide; and
a first end of the first waveguide extends from the die substrate to a first inner side surface of the avoidance groove, the first inner lens is disposed at a position that corresponds to the first waveguide and that is on the first inner side surface, the passive optical component is disposed in the avoidance groove and is located in an optical transmission path between the second inner lens and the first inner lens, and the second inner lens, the passive optical component, the first inner lens, and the first waveguide sequentially form a transmission path of a first optical signal.

3. The optical chip according to claim 2, wherein a second waveguide is further disposed on the die substrate, and a first end of the second waveguide extends from the die substrate to a second inner side surface of the avoidance groove; and
the second inner lens is disposed at a position corresponding to the first end of the second waveguide, and the second waveguide is configured to perform transmission of the first optical signal with the second inner lens.

4. The optical chip according to claim 2, wherein the built-in optical processing component further comprises a first active optical component, the first active optical component is disposed in the avoidance groove, and the first active optical component is coupled to the second inner lens; and
the first active optical component is configured to perform transmission of the first optical signal with the second inner lens.

5. The optical chip according to any one of claims 2 to 4, wherein the second inner lens is specifically configured to:
shape the first optical signal into parallel light, wherein a beam waist mode field of the second inner lens is greater than a first value, and the first value satisfies: a collimation distance of the first optical signal that is the parallel light is greater than a distance between the second inner lens and the passive optical component.

6. The optical chip according to claim 1, wherein the built-in optical processing component comprises a second active optical component, the inner lens comprises a third inner lens, the waveguide comprises a third waveguide, a first end of the third waveguide extends from the die substrate to an inner side surface of the avoidance groove, and the third inner lens is mounted on the second active optical component and is located at a position corresponding to the first end of the third waveguide;
the second active optical component is configured to perform transmission of a second optical signal with the third inner lens; and
the third inner lens is configured to: shape the second optical signal, and perform transmission of the shaped second optical signal with the first end of the third waveguide.

7. The optical chip according to any one of claims 1 to 6, wherein the at least one 3D printing lens further comprises an outer lens, the waveguide further comprises a fourth waveguide, a first end of the fourth waveguide extends from the die substrate to an outer side surface of the die substrate, and the outer lens is disposed at a position that corresponds to the first end of the fourth waveguide and that is on the die substrate;
the fourth waveguide is configured to perform transmission of a third optical signal with the outer lens; and
the outer lens is configured to: shape the third optical signal, and transmit the shaped third optical signal.

8. The optical chip according to claim 7, wherein the optical chip further comprises a packaging coupling structure, and the outer lens is configured to perform transmission of the shaped third optical signal with the packaging coupling structure.

9. The optical chip according to claim 7 or 8, wherein the outer lens is an elliptical lens structure.

10. The optical chip according to any one of claims 1 to 9, wherein the inner lens comprises a connection portion and a shaping lens and/or the outer lens comprises a connection portion and a shaping lens;
the shaping lens of the inner lens is coupled to the die substrate or the built-in optical processing component through the corresponding connection portion; and
the shaping lens of the outer lens is coupled to the die substrate through the corresponding connection portion.

11. The optical chip according to any one of claims 1 to 10, wherein the inner lens comprises a connection portion, a transmission portion, and a shaping lens and/or the outer lens comprises a connection portion, a transmission portion, and a shaping lens;
the shaping lens of the inner lens is coupled to the corresponding transmission portion, and the transmission portion and/or the shaping lens of the inner lens are/is further coupled to the die substrate or the built-in optical processing component through the connection portion; and
the shaping lens of the outer lens is coupled to the corresponding transmission portion, and the transmission portion and/or the shaping lens of the outer lens are/is further coupled to the die substrate through the connection portion.

12. An optical component, comprising a mounting substrate and an optical chip, wherein the optical chip is disposed on the mounting substrate, the optical chip comprises a die substrate, at least one 3D printing lens, and a built-in optical processing component, a waveguide is disposed on the die substrate, an avoidance groove is formed on an outer surface of the die substrate, the at least one 3D printing lens comprises an inner lens, the inner lens and the built-in optical processing component are disposed in the avoidance groove, the inner lens is coupled to the die substrate or the built-in optical processing component, and the inner lens is configured to: shape an optical signal, and perform transmission of the optical signal with the waveguide and/or the built-in optical processing component.

13. The optical component according to claim 12, wherein the optical component further comprises at least one external discrete component, the at least one 3D printing lens of the optical chip further comprises an outer lens, the at least one external discrete component is disposed on the mounting substrate, the outer lens is coupled to an outer side surface of the die substrate of the optical chip, and the optical chip implements optical communication coupling to the at least one external discrete component through the outer lens.

14. A manufacturing method, for manufacturing an optical chip, wherein the method comprises:
etching a die array on a wafer, wherein a waveguide is disposed on a die substrate of each die in the die array, and an avoidance groove is formed on an outer surface of the die substrate; and
mounting a built-in optical processing component in the avoidance groove, and etching at least one 3D printing lens based on a 3D printing technology, wherein the at least one 3D printing lens comprises an inner lens, the inner lens is disposed in the avoidance groove, the inner lens is coupled to the die substrate or the built-in optical processing component, and the inner lens is configured to: shape an optical signal, and perform transmission of the optical signal with the waveguide and/or the built-in optical processing component.

15. The manufacturing method according to claim 14, wherein the built-in optical processing component comprises a passive optical component, the inner lens comprises a first inner lens and a second inner lens, the waveguide comprises a first waveguide, and a first end of the first waveguide extends from the die substrate to a first inner side surface of the avoidance groove;
etching the at least one 3D printing lens comprises: etching the first inner lens at a position that corresponds to the first waveguide and that is on the first inner side surface; and
mounting the built-in optical processing component in the avoidance groove comprises: mounting the passive optical component in the avoidance groove and in an optical transmission path between the second inner lens and the first inner lens, wherein the second inner lens, the passive optical component, the first inner lens, and the first waveguide form a transmission path of a first optical signal in a transmission sequence.

16. The manufacturing method according to claim 15, wherein a second waveguide is further disposed on the die substrate, and a first end of the second waveguide extends from the die substrate to a second inner side surface of the avoidance groove; and
etching the at least one 3D printing lens further comprises: etching the second inner lens at a position corresponding to the first end of the second waveguide, wherein the second waveguide is configured to perform transmission of the first optical signal with the second inner lens.

17. The manufacturing method according to claim 15, wherein the built-in optical processing component further comprises a first active optical component;
mounting the built-in optical processing component in the avoidance groove further comprises: disposing the first active optical component in the avoidance groove; and
etching the at least one 3D printing lens further comprises: etching the second inner lens on the first active optical component, wherein the first active optical component is configured to output the first optical signal to the second inner lens.

18. The manufacturing method according to claim 14, wherein the built-in optical processing component comprises a second active optical component, the inner lens comprises a third inner lens, the waveguide comprises a third waveguide, and a first end of the third waveguide extends from the die substrate to an inner side surface of the avoidance groove;
mounting the built-in optical processing component in the avoidance groove comprises: mounting the second active optical component in the avoidance groove; and
etching the at least one 3D printing lens comprises: etching the third inner lens on the second active optical component and at a position corresponding to the first end of the third waveguide, wherein the second active optical component is configured to output a second optical signal to the third inner lens, and the third inner lens is configured to: shape the second optical signal, and output the shaped second optical signal to the first end of the third waveguide.

19. The manufacturing method according to any one of claims 14 to 18, wherein the at least one 3D printing lens further comprises an outer lens, the waveguide further comprises a fourth waveguide, and a first end of the fourth waveguide extends from the die substrate to an outer side face of the die substrate; and
etching the at least one 3D printing lens further comprises: etching the outer lens at a position that corresponds to the first end of the fourth waveguide and that is on the die substrate, wherein the fourth waveguide is configured to perform transmission of a third optical signal with the outer lens, and the outer lens is configured to: shape the third optical signal, and transmit the shaped third optical signal.

20. The manufacturing method according to any one of claims 14 to 19, wherein the method further comprises:
manufacturing a packaging coupling structure outside the die substrate, to package the die substrate to obtain the optical chip, wherein the outer lens is configured to perform transmission of the shaped third optical signal with the packaging coupling structure.

21. A manufacturing method, for manufacturing an optical component, wherein the method comprises:
etching a die array on a wafer, wherein a waveguide is disposed on a die substrate of each die in the die array, and an avoidance groove is formed on an outer surface of the die substrate;
mounting a built-in optical processing component in the avoidance groove, and etching at least one 3D printing lens based on a 3D printing technology, wherein the at least one 3D printing lens comprises an inner lens, the inner lens is disposed in the avoidance groove, the inner lens is coupled to the die substrate or the built-in optical processing component, and the inner lens is configured to: shape an optical signal, and perform transmission of the optical signal with the waveguide and/or the built-in optical processing component;
performing die packaging on the die substrate to obtain an optical chip; and
packaging and disposing the optical chip on a mounting substrate to obtain the optical component.

22. The manufacturing method according to claim 21, wherein the optical component further comprises at least one external discrete optical component, and packaging and disposing the optical chip on the mounting substrate to obtain the optical component further comprises:
packaging and disposing the optical chip and the at least one external discrete optical component on the mounting substrate to obtain the optical component.

23. An optical module, comprising a fiber interface and the optical component according to claim 12 or 13, wherein the optical component is coupled to the fiber interface.

24. An optical processing device, wherein the optical processing device comprises a mounting plate and the optical component according to claim 12 or 13, and the optical component is disposed on the mounting plate; or the optical processing device comprises the mounting plate and the optical module according to claim 23, and the optical module is disposed on the mounting plate.
